(19) Europäisches Patentamt
European Patent Office
Office européen des brevets

(11) **EP 3 117 189 B1**

(12) **EUROPÄISCHE PATENTSCHRIFT**

(45) Veröffentlichungstag und Bekanntmachung des Hinweises auf die Patenterteilung:
**16.09.2020   Patentblatt 2020/38**

(21) Anmeldenummer: **15708136.5**

(22) Anmeldetag: **23.02.2015**

(51) Int Cl.:
*G01F 1/84* (2006.01)     *G01N 9/00* (2006.01)
*G01F 15/02* (2006.01)     *G01F 15/14* (2006.01)
*G01N 11/16* (2006.01)     *G01N 11/00* (2006.01)

(86) Internationale Anmeldenummer:
**PCT/EP2015/053677**

(87) Internationale Veröffentlichungsnummer:
**WO 2015/135738 (17.09.2015 Gazette 2015/37)**

(54) **WANDLERVORRICHTUNG SOWIE DAMIT GEBILDETES MESSSYSTEM**

TRANSFORMER DEVICE AND MEASUREMENT SYSTEM FORMED THEREWITH

DISPOSITIF CONVERTISSEUR ET SYSTÈME DE MESURE FORMÉ AVEC CE DERNIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.03.2014   DE 102014103427**

(43) Veröffentlichungstag der Anmeldung:
**18.01.2017   Patentblatt 2017/03**

(73) Patentinhaber: **Endress+Hauser Flowtec AG**
**4153 Reinach (BL) (CH)**

(72) Erfinder:
• **RIEDER, Alfred**
  **84032 Landshut (DE)**
• **ZHU, Hao**
  **85354 Freising (DE)**
• **BITTO, Ennio**
  **4147 Aesch (CH)**
• **ECKERT, Gerhard**
  **79639 Grenzach-Wyhlen (DE)**
• **HUBENSTEINER, Josef**
  **85354 Freising (DE)**
• **WIESMANN, Michael**
  **85356 Freising (DE)**
• **LIN, Yaoying**
  **85356 Freising (DE)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
EP-A2- 1 530 030          WO-A1-2008/064459
DE-A1-102011 080 415

**Beschreibung**

Die Erfindung betrifft eine Wandlervorrichtung, die geeignet ist, eine der Wandlervorrichtung innewohnenden, gleichwohl zeitlich veränderlichen Ziel-Temperatur, insb. einer Temperatur eines in einem Lumen eines Rohrs geführten Fluids und/oder einer Temperatur einer von nämlichem Fluid kontaktierten Wandung eines solchen Rohrs, zu messen. Ferner betrifft die Erfindung auch ein mittels einer solchen Wandlervorrichtung gebildetes Meßsystem.

Wandlervorrichtungen der in Rede stehenden Art umfassen jeweils ein eine von einer - typischerweise metallischen - Wandung umhüllte Kavität aufweisendes Wandler-Gehäuse sowie ein ein von einer - typischerweise ebenfalls metallischen - Wandung umhülltes Lumen aufweisendes Rohr, das innerhalb nämlicher Kavität des Wandler-Gehäuses angeordnet ist, derart, daß zwischen einer der Kavität zugewandte Innenfläche der Wandung des Wandler-Gehäuses und einer Mantelfläche der Wandung des Rohrs, nämlich einer der Kavität zugewandten Außenfläche der Wandung des Rohrs ein - zumeist mit Luft oder einem inertem Gas befüllter - Zwischenraum gebildet ist. Das wenigstens eine Rohr ist im besonderen dafür eingerichtet, in seinem Lumen ein jeweils zumindest zeitweise strömendes Fluid, beispielsweise ein Gas, eine Flüssigkeit oder eine fließfähige Dispersion, zu führen, derart, daß eine nämlichem Lumen zugewandte Innenfläche der Wandung des Rohrs von im Lumen geführtem Fluid unter Bildung einer ersten Grenzfläche erster Art, nämliche einer Grenzfläche zwischen einer fluiden und einer festen Phase, kontaktiert ist. Zum Messen einer Ziel-Temperatur, nämlich einer der jeweiligen Wandlervorrichtung innewohnenden, gleichwohl zeitlich veränderlichen Temperatur an einem vorab definierten Meß- bzw. Bezugspunkt innerhalb der jeweiligen Wandlervorrichtung, umfassen derartige Wandlervorrichtungen ferner wenigstens zwei jeweils mittels eines innerhalb des Zwischenraums angeordneten, mithin im Betrieb nicht von dem im Lumen des wenigstens einen Rohrs kontaktierten Temperaturfühler gebildeten Temperatursensoren, von denen wenigstens einer einen nämlichen Temperaturfühler thermisch leitend mit der Wandung verbindenden, beispielsweise mittels Wärmeleitkleber gebildeten, Kopplungskörper aufweist. Solche Temperaturfühler können beispielsweise ein Platin-Meßwiderstand, ein Thermistor oder ein Thermoelements oder aber mittels mehrerer solcher temperaturempfindlichen elektrischen bzw. elektronischen Bauteilen gebildete elektrische Schaltungen sein. Jeder der wenigstens zwei Temperatursensoren ist dafür eingerichtet, jeweils eine einer Temperatur an einer mittels des jeweiligen Temperaturfühlers gebildeten Temperaturmeßstelle entsprechende Meßstellentemperatur jeweils in ein entsprechendes Temperaturmeßsignal, nämlich eine die jeweilige Meßstellentemperatur repräsentierendes elektrisches Meßsignal, beispielsweise mit einer von nämlicher Meßstellentemperatur abhängigen elektrische Signalspannung und/oder einem von nämlicher Meßstellentemperatur abhängigen elektrischen Signalstrom, zu wandeln. Ziel-Temperatur kann bei solchen Wandlervorrichtungen beispielsweise eine Meßfluid-Temperatur, nämlich einer Temperatur des im Betrieb der Wandlervorrichtung im Lumen des wenigstens einen Rohrs geführten Fluids, und/oder eine Rohrtemperatur, nämlich eine Temperatur der vom jeweils im Lumen befindlichen Fluid kontaktierten Wandung des Rohrs sein.

Die Wandlervorrichtung kann ferner unter Bildung eines Meßsystem zum Messen wenigstens einer Meßgröße, beispielsweise nämlich der Meßfluid-Temperatur oder auch einer Dichte und/oder einer Viskosität, des im wenigstens einen Rohr der jeweiligen Wandlervorrichtung geführten Fluids an eine, beispielsweise mittels wenigstens eines Mikroprozessors gebildete, Meß- und Betriebs-Elektronik angeschlossen sein. Nämliche Meß- und Betriebs-Elektronik wiederum kann dafür eingerichtet sein, unter Verwendung der mittels der Wandlervorrichtung generierten wenigstens zwei Temperaturmeßsignale einen Meßwert zu generieren, der die wenigstens eine Meßgröße repräsentiert. Bei solchen Meßsystemen ist die Meß- und Betriebs-Elektronik typischerweise innerhalb wenigstens eines vergleichsweise robusten, insb. schlag-, druck-, und/oder wetterfesten, Elektronik-Gehäuse untergebracht. Das Elektronik-Gehäuse kann beispielsweise von der Wandlereinrichtung entfernt angeordnet und mit diesem nur über eine flexible Leitung verbunden sein; es kann aber auch direkt am Wandler-Gehäuse angeordnet bzw. daran fixiert sein. Weiterführende Beispiele für Wandlervorrichtungen der in Rede stehenden Art bzw. damit gebildete Meßsysteme sind u.a. in der EP-A 919 793, der US-A 2004/0187599, der US-A 2008/0127745, der US-A 2011/0113896, der US-A 47 68 384, der US-A 56 02 346, der US-A 60 47 457, der US-B 70 40 179, der US-B 75 49 319, der WO-A 01/02816, der WO-A 2009/051588, der WO-A 2009/134268, der WO-A 2012/018323, der WO-A 2012/033504, der WO-A 2012/067608 oder der WO-A 2012/115639 gezeigt.

Bei in der industriellen Meß- und Automatisierungstechnik verwendeten Meßsystemen der vorbezeichneten Art ist die jeweilige Meß- und Betriebs-Elektronik üblicherweise über entsprechende elektrische Leitungen auch an ein vom jeweiligen Meßsystem zumeist räumlich entfernt angeordnetes und zumeist auch räumlich verteiltes übergeordnetes elektronisches Datenverarbeitungssystem elektrisch angeschlossen, an das die vom jeweiligen Meßsystem erzeugten Meßwerte mittels wenigstens eines diese entsprechend tragenden Meßwertesignals zeitnah, beispielsweise auch in Echtzeit, weitergegeben werden. Meßsysteme der in Rede stehenden Art sind zudem üblicherweise mittels eines innerhalb des übergeordneten Datenverarbeitungssystems vorgesehenen Datenübertragungsnetzwerks miteinander und/oder mit entsprechenden elektronischen Prozeß-Steuerungen verbunden, beispielsweise vor Ort installierte Speicherprogrammierbare Steuerungen (SPS) oder in einer entfernten Leitwarte installierte Prozeß-Leitrechnern, wohin die mittels des jeweiligen Meßsystems erzeugten und in geeigneter Weise digitalisierten und entsprechend codierten Meßwerte weitergesendet werden. Mittels solcher Prozeß-Leitrechner können die übertragenen Meßwerte weiterverarbeitet und als entsprechende Meßergebnisse z.B. auf Monitoren visualisiert und/oder in Steuersignale für andere als Stellgeräte ausgebildete Feldgeräte, wie z.B. Magnet-Ventile, Elektro-Motoren etc., umgewandelt werden. Da moderne Meßanordnungen zumeist auch direkt von solchen Leitrechnern aus überwacht und gegebenenfalls gesteuert und/oder konfiguriert werden können, werden in entsprechender Weise über vorgenannte, zumeist hinsichtlich der Übertragungsphysik und/oder der Übertragungslogik hybride Datenübertragungsnetzwerke dem Meßsystem zugewiesene Betriebsdaten gleichermaßen versendet. Dementsprechend dient das Datenverarbeitungssystem üblicherweise auch dazu, das vom Meßsystem gelieferte Meßwertsignal entsprechend den Anforderungen nachgelagerter Datenübertragungsnetzwerke zu konditionieren, beispielsweise geeignet zu digitalisieren und gegebenenfalls in ein entsprechendes Telegramm umzusetzen, und/oder vor Ort auszuwerten. Dafür sind in solchen Datenverarbeitungssystemen mit den jeweiligen Verbindungsleitungen elektrisch gekoppelte Auswerteschaltungen vorgesehen, die die vom jeweiligen Meßsystem empfangenen Meßwerte vor- und/oder weiterverarbeiten sowie, falls erforderliche, geeignet konvertieren. Zur Datenübertragung dienen in solchen industriellen Datenverarbeitungssystemen zumindest abschnittsweise, insb. serielle, Feldbusse, wie z.B. FOUNDATION FIELDBUS, RACKBUS-RS 485, PROFIBUS etc., oder beispielsweise auch Netzwerke auf Basis des ETHERNET-Standards sowie die entsprechenden, zumeist übergreifend standardisierten Übertragungs-Protokolle. Alternativ oder in Ergänzung können bei modernen Meßsystemen der in Rede stehenden Art Meßwerte auch drahtlos per Funk an das jeweilige Datenverarbeitungssystem übermittelt werden. Neben den für die Verarbeitung und Konvertierung der von den jeweils angeschlossenen Meßsystem gelieferten Meßwerte erforderlichen Auswerteschaltungen weisen solche übergeordnete Datenverarbeitungssysteme zumeist auch der Versorgung der angeschlossenen Meßsystemen mit elektrischer Energie dienende elektrische Versorgungsschaltungen auf, die eine entsprechende, ggf. direkt vom angeschlossenen Feldbus gespeiste, Versorgungsspannung für die jeweilige Elektronik bereitstellen und die daran angeschlossenen elektrische Leitungen sowie die jeweiligen Elektroniken durchfließende elektrische Ströme treiben. Eine Versorgungsschaltung kann dabei beispielsweise genau einem Meßsystem bzw. einer entsprechenden Elektronik jeweils zugeordnet und zusammen mit der dem jeweiligen Meßsystem zugeordneten Auswerteschaltung - beispielsweise zu einem entsprechenden Feldbusadapter vereint - in einem gemeinsamen, z.B. als Hutschienen-Modul ausgebildeten, Elektronik-Gehäuse untergebracht sein. Es ist aber durchaus auch üblich, Versorgungsschaltungen und Auswerteschaltungen jeweils in separaten, ggf. voneinander räumlich entfernten Elektronik-Gehäusen unterzubringen und über externe Leitungen miteinander entsprechend zu verdrahten.

Wandlervorrichtungen der in Rede stehenden Art finden nicht zuletzt auch in dem Ermitteln von Meßgrößen, beispielsweise einer Massendurchflußrate, einer Dichte oder einer Viskosität, von in einer Prozeßleitung, beispielsweise einer Rohrleitung, geführten Fluiden dienenden vibronischen Meßsystemen Verwendung bzw. können integraler Bestandteil eines solchen Meßsystems sein. Aufbau und Wirkungsweise solcher, mittels einer solchen Wandlervorrichtung gebildeten - beispielsweise auch als Coriolis-Massendurchfluß-Meßgeräte oder auch als Coriolis-Massendurchfluß-/Meßsysteme ausgebildeten - vibronischen Meßsysteme sind dem Fachmann an und für sich bekannt und beispielsweise auch in den eingangs erwähnten EP-A 919 793, US-A 2004/0187599, US-A 2008/0127745, US-A 2011/0113896, US-A 47 68 384, US-A 56 02 346, US-B 70 40 179, US-B 75 49 319, WO-A 01/02816, WO-A 2009/051588, WO-A 2009/134268, WO-A 2012/018323, WO-A 2012/033504, WO-A 2012/067608, WO-A 2012/115639, oder beispielsweise auch in der US-A 2001/0037690, der US-A 2011/0265580, der US-A 2011/0146416, der US-A 2011/0113896, der US-A 2010/0242623, der WO-A 2013/092104, der WO-A 01/29519, der WO-A 98/02725, der WO-A 94/21999 oder der WO-A 88/02853 ausführlich und detailiert beschrieben. Bei derartigen vibronischen Meßsystemen ist das wenigstens eine Rohr der jeweiligen Wandlervorrichtung im besonderen auch dafür eingerichtet, zum Messen der wenigstens einen Meßgröße im Betrieb zumindest zeitweise auch vibrieren gelassen zu werden während es mit zu messendem Fluid befüllt bzw. vom zu messenden Fluid durchströmt ist. Typischerweise wird das wenigstens eine Rohr mittels wenigstens eines darauf einwirkenden elektro-mechanischen, beispielsweise mittels eines am wenigstens einen Rohr fixierten Permanentmagneten und mittels einer damit wechselwirkende Erregerspule gebildeten, Schwingungserregers der Wandlervorrichtung aktiv zu Nutzschwingungen, nämlich mechanischen Schwingungen um eine dem jeweiligen Rohr zugehörige statische Ruhelage angeregt, insb. auch solche mechanischen Schwingungen, die geeignet sind, im strömenden Fluid von einer Massendurchflußrate, m, abhängige Corioliskräfte zu induzieren, und/oder die geeignet sind, im strömenden Fluid von einer Viskosität, $\eta$, abhängige Reibungskräfte zu induzieren, und/oder die geeignet sind, im strömenden Fluid von einer Dichte, $\rho$, abhängige Trägheitskräfte zu induzieren. Zum Erfassen von mechanischen Schwingungen des wenigstens einen Rohrs, nicht zuletzt auch dessen Nutzschwingungen, weisen die in solchen vibronischen Meßsystemen verwendeten Wandlervorrichtung ferner jeweils wenigstens einen, beispielsweise elektrodynamischen, Schwingungssensor auf, der dafür eingerichtet ist wenigstens ein Schwingungssignal, nämlich ein Schwingungsbewegungen des wenigstens einen Rohrs repräsentierendes elektrisches Meßsignal, beispielsweise mit einer von einer Geschwindigkeit der Schwingungsbewegungen des wenigstens einen Rohrs abhängigen elektrische Signalspannung, zu wandeln. Die Meß- und Betriebs-Elektronik solcher vibronischer Meßsysteme ist - nicht zuletzt für den Fall, daß der wenigstens eine Meßwert eine Dichte oder eine Viskosität des im wenigstens einen Rohr geführten Fluids repräsentiert -, weiters dafür eingerichtet, den wenigstens einen Meßwert unter Verwendung sowohl der mittels der Wandlervorrichtung generierten wenigstens zwei Temperaturmeßsignale als auch des wenigstens einen Schwingungssignals zu generieren, beispielsweise derart, daß die Meß- und Betriebs-Elektronik den wenigstens einen Meßwert basierend auf einer anhand des Schwingungssignals gemessenen Nutzfrequenz, nämlich einer von der zu messenden Meßgröße abhängigen Schwingfrequenz der Nutzschwingungen ermittelt und dafür eine allfällige Abhängigkeit nämlicher Nutzfrequenz auch von einer momentanen Meßfluid-Temperatur bzw. einer Temperaturverteilung innerhalb der Wandung des wenigstens einen Rohrs meßtechnisch kompensiert.

Bei in der industriellen Meß- und Automatisierungstechnik verwendeten modernen Meßsystemen, nicht zuletzt auch bei vibronischen Meßsystemen der vorbezeichneten Art, ist die Meß- und Betriebs-Elektronik zumeist mittels eines oder mehreren, ggf. auch als digitale Signalprozessoren (DSP) ausgebildeten Mikroprozessoren realisiert, derart, daß die Meß- und Betriebs-Elektronik die jeweiligen Meßwerte für die wenigstens eine Meßgröße durch numerische Verrechnung von aus Meßsignalen der jeweiligen Wandlervorrichtung, beispielsweise nämlich anhand von aus den wenigstens zwei Temperaturmeßsignalen bzw. dem wenigstens einen Schwingungssignal gewonnenen, digitalen Abtatswerten ermittelt und inform von entsprechenden Digitalwerten bereitstellt. Neben der Auswertung der Temperaturmeßsignale sowie des wenigstens einen Schwingungssignals dient die Meß- und Betriebs-Elektronik vibronischer Meßsysteme der vorbezeichneten Art typischerweise auch dazu, wenigstens ein, beispielsweise harmonisches und/oder getaktetes, Treibersignal für den wenigstens einen elektro-mechanischen Schwingungserreger zu generieren. Nämliches Treibersignal kann beispielsweise hinsichtlich einer Stromstärke und/oder einer Spannungshöhe geregelt sein.

Wie u.a. den eingangs erwähnten US-A 47 68 384, US-B 70 40 179 bzw. US-A 2008/0127745 zu entnehmen, ist ein besonderes Problem der Ermittlung einer Temperatur in Wandlervorrichtungen der in Rede stehenden Art, sei es einer Meßfluid-Temperatur oder einer Rohrtemperatur, darin zu sehen, daß die mittels der wenigstens zwei, ggf. auch drei oder mehr Temperatursensoren erfaßten Meßstellentemperaturen zunächst jeweils eigentlich nur einer lokalen Temperatur an genau der mittels des jeweiligen Temperaturfühlers gebildeten Temperaturmeßstelle entsprechen, daß aber umgekehrt zumeist eigentlich eine lokale bzw. mittlere Temperatur an einem anderen Vorrichtungsreferenzpunkt, nämlich einem von jeder der Temperaturmeßstellen entfernten Bezugspunkt innerhalb der Wandlervorrichtung von Interesse ist (Ziel-Temperatur), beispielsweise nämlich - nicht zuletzt zwecks Ermittlung der Meßfluid-Temperatur - eine Temperatur innerhalb des Lumens des wenigstens einen Rohrs, und/oder - nicht zuletzt zwecks Korrektur einer Abhängigkeit der Nutzfrequenz von einer räumlichen Temperaturverteilung innerhalb der Wandung des wenigstens einen Rohrs - eigentlich eine räumlich gemittelte Rohrtemperatur als Ziel-Temperatur dienen sollen. Ein weiteres Problem kann zudem darin bestehen, daß infolge unvermeidlicher zeitlicher Änderungen der Meßfluid-Temperatur innerhalb nämlicher Wandlervorrichtung regelmäßig auch dynamische Wärmeausgleichsvorgänge stattfinden können, die ebenfalls, nicht zuletzt aufgrund der nur sehr begrenzten Anzahl an Temperaturmeßstellen bzw. aufgrund von deren gegenseitigem räumlichen Abstand, zu fehlerhaften Meßergebnissen in mittels Wandlervorrichtungen der in Rede stehenden Art gebildeten Meßsystemen führen können, sei es bei der Ermittlung der Meßfluidtemperatur oder, etwa im Falle der Verwendung der Wandlervorrichtung in einem vibronischen Meßsystem, bei den basierend auf Nutzschwingungen des wenigstens einen Rohrs ermittelten Meßgrößen, wie z.B. der Dichte und/oder der Viskosität eines im wenigstens einen Rohr geführten Fluids oder auch einer Massendurchflußrate eines durch das wenigstens einen Rohr strömenden Fluids. Darüberhinaus kann, wie u.a. auch in der eingangs erwähnten WO-A 2009/051588 erörtert, auch eine Wandlerumgebungstemperatur, nämliche eine Temperatur einer das Wandler-Gehäuse umgebenden Atmosphäre, bzw. eine zeitliche Änderung nämlicher Umgebungstemperatur die Genauigkeit, mit der Meßfluid-Temperatur bzw. die Rohrtemperatur mittels solcher Wandlervorrichtungen ermittelt werden kann, beeinträchtigen. Weiterführende Untersuchungen seitens der Erfinder haben ferner ergeben, daß neben den vorbezeichneten Einflüssen überraschenderweise aber auch eine zwischen der Meßfluidtemperatur und der Rohrumgebungstemperatur, nämlich einer Temperatur des in dem zwischen der Innenfläche der Wandung des Wandler-Gehäuses und der Mantelfläche der Wandung des Rohrs gebildeten Zwischenraum vorgehalten, mithin das Rohr umhüllenden Fluidvolumens existierende Temperaturdifferenz bzw. deren zeitlich Änderung einen Einfluß auf die jeweiligen Temperaturmeßsignale nehmen kann. Grundsätzlich ist nämlich jeder der Temperartursensoren über eine jeweiligen dem Zwischenraum zugewandten Oberfläche - mehr oder weniger stark - auch an das im Zwischenraum vorgehaltene Fluidvolumen thermisch gekoppelt, derart, daß ein zwischen dem Fluid innerhalb des Lumens des Rohres und dem das Rohr umhüllenden Fluidvolumens regelmäßig stattfindender Wärmedurchgang teilweise auch durch den jeweiligen Temperatursensor führt. Aufgrund eines solchen Wärmedurchgangs bzw. damit einhergehend auch zwischen jedem der Temperartursensoren und dem im Zwischenraum gebildeten Fluidvolumen jeweils ablaufender Wärmetransportvorgänge ist die jeweilige Meßstellentemperatur somit nicht nur von der Rohr- bzw. die Meßfluidtemperatur abhängig, sondern regelmäßig auch von der Rohrumgebungstemperatur nennenswert mitbestimmt. Darüberhinaus konnte durch die Erfinder auch festgestellt werden, daß die vorbezeichnete thermische Kopplung gelegentlich ein solches Ausmaß annehmen kann, das hinsichtlich der für Meßsysteme der in Rede stehenden Art, nicht zuletzt auch für vibronische Meßsysteme angestrebten hohen Meßgenauigkeit eigentlich nicht mehr vernachlässigbar ist, bzw. daß umgekehrt ein Ignorieren des Einflusses nämlicher Temperaturdifferenz auf die jeweils erfaßte Meßstellentemperatur bzw. das diese repräsentierende Temperaturmeßsignal durchaus zu beträchtlich Meßfehlern führen kann, etwa derart, daß die mittels des jeweiligen Meßsystems jeweils ermittelten Meßwerte für die Ziel-Temperatur, insb. auch bei zeitlich konstant bleibender Ziel-Temperatur, gelegentlich um mehr als 0,5 K von der tatsächlichen bzw. wahren Ziel-Temperatur abweichen.

Dem Rechnung tragend besteht eine Aufgabe der Erfindung darin, Wandlervorrichtungen der vorgenannten Art so zu verbessern, daß auch bereits mit zwei jeweils außerhalb des Lumens des wenigstens einen Rohrs, gleichwohl innerhalb des Wandler-Gehäuses angeordneten Temperatursensoren eine im Vergleich zu herkömmlichen Wandlervorrichtungen präzisere Ermittlung einer an einem vorgegeben bzw. vorab festgelegten, gleichwohl von jedem der wenigstens zwei Temperatursensoren entfernt innerhalb des Wandler-Gehäuses lokalisierten Vorrichtungsreferenzpunkt herrschende Ziel-Temperatur, beispielsweise nämlich der Meßfluidtemperatur und/oder einer Rohrtemperatur, ermöglicht ist, bzw. daß nämliche Ziel-Temperatur, nicht zuletzt auch in einem für Wandlervorrichtungen der in Rede stehenden Art etwa zwischen -40°C und +150°C liegenden typischen Arbeitsbereich mit einem Meßfehler, der kleiner als 0,2 K ist, bestimmt werden kann; dies nicht zuletzt auch für den Fall, daß die jeweilige Rohr- bzw. Meßfluidtemperatur und/oder die jeweilige Wandler- bzw. Rohrumgebungstemperatur in nicht vorhersehbarer Weise zeitlich veränderlich sind bzw. die zwischen der Meßfluidtemperatur und der Rohrumgebungstemperatur existierende Temperaturdifferenz über einen weiten Temperaturbereich schwankt.

Zur Lösung der Aufgabe besteht die Erfindung in einer Wandlervorrichtung, die ein eine von einer, beispielsweise metallischen, Wandung umhüllte Kavität aufweisendes Wandler-Gehäuse sowie ein ein von einer, beispielsweise metallischen, Wandung umhülltes Lumen aufweisendes Rohr umfaßt, welches Rohr innerhalb der Kavität des Wandler-Gehäuses angeordnet ist, derart, daß zwischen einer der Kavität zugewandte Innenfläche der Wandung des Wandler-Gehäuses und einer der Kavität zugewandten Mantelfläche der Wandung des Rohrs ein Zwischenraum gebildet ist, und welches Rohr dafür eingerichtet ist, in dessen Lumen ein, insb. zumindest zeitweise strömendes, Fluid, beispielsweise ein Gas, eine Flüssigkeit oder eine fließfähige Dispersion, zu führen, derart, daß eine nämlichem Lumen zugewandte Innenfläche der Wandung des Rohrs von im Lumen geführtem Fluid unter Bildung einer ersten Grenzfläche erster Art, nämlich einer Grenzfläche zwischen einer fluiden und einer festen Phase, kontaktiert ist. Das Wandler-Gehäuse und das Rohr der erfindungsgemäßen Wandlervorrichtung sind zudem dafür eingerichtet, im Zwischenraum ein, beispielsweise eine spezifische Wärmeleitfähigkeit von weniger als 1 W / (m · K) aufweisendes, Fluid, beispielsweise nämlich Luft oder ein inertes Gas, unter Bildung eines das Rohr umhüllenden Fluidvolumens zu halten, derart, daß die dem Zwischenraum zugewandte Mantelfläche der Wandung des Rohrs unter Bildung einer zweiten Grenzfläche erster Art von im Zwischenraum gehaltenem Fluid kontaktiert ist. Die erfindungsgemäße Wandlervorrichtung umfaßt ferner einen mittels eines innerhalb des Zwischenraums angeordneten - beispielsweise mittels eines Platin-Meßwiderstandes, eines Thermistors oder eines Thermoelements gebildeten - ersten Temperaturfühlers sowie mittels eines nämlichen ersten Temperaturfühler thermisch leitend mit der Wandung des Rohrs koppelnden ersten Kopplungskörpers gebildeten ersten Temperatursensor zum Wandeln einer ersten Meßstellentemperatur, nämlich einer Temperatur an einer mittels des ersten Temperaturfühlers gebildeten ersten Temperaturmeßstelle, in eine erstes Temperaturmeßsignal, nämlich ein die erste Meßstellentemperatur repräsentierendes erstes elektrisches Meßsignal, beispielsweise mit einer von nämlicher ersten Meßstellentemperatur abhängigen elektrische Signalspannung und/oder einem von nämlicher ersten Meßstellentemperatur abhängigen elektrischen Signalstrom, sowie einen mittels eines vom ersten Temperaturfühler beabstandet innerhalb des Zwischenraums angeordneten - beispielsweise mittels eines Platin-Meßwiderstandes, eines Thermistors oder eines Thermoelements gebildeten - zweiten Temperaturfühlers sowie mittels eines nämlichen zweiten Temperaturfühler thermisch leitend mit der Wandung des Rohrs koppelnden zweiten Kopplungskörpers gebildeten zweiten Temperatursensor zum Wandeln einer zweiten Meßstellentemperatur, nämlich einer Temperatur an einer mittels des zweiten Temperaturfühlers gebildeten zweiten Temperaturmeßstelle, in ein zweites Temperaturmeßsignal, nämlich ein die zweite Meßstellentemperatur repräsentierendes zweites elektrisches Meßsignal, beispielsweise mit einer von nämlicher zweiten Meßstellentemperatur abhängigen elektrische Signalspannung und/oder einem von nämlicher zweiten Meßstellentemperatur abhängigen elektrischen Signalstrom. Der erste Temperatursensor kontaktiert mittels des ersten Kopplungskörpers die Mantelfläche der Wandung des Rohrs unter Bildung einer ersten Grenzfläche zweiter Art, nämlich einer Grenzfläche zwischen zwei festen Phasen, und der zweite Temperatursensor kontaktiert mittels des zweiten Kopplungskörpers die Mantelfläche der Wandung des Rohrs unter Bildung einer zweiten Grenzfläche zweiter Art, derart, daß einem aus einer zwischen der ersten Grenzfläche zweiter Art und der ersten Temperaturmeßstelle herrschenden Temperaturdifferenz resultierenden, durch nämliche Grenzfläche insgesamt hindurchtretenden und weiter zur ersten Temperaturmeßstelle fließenden Wärmestrom ein erster Wärmewiderstand und einem aus einer zwischen der zweiten Grenzfläche zweiter Art und der zweiten Temperaturmeßstelle herrschenden Temperaturdifferenz resultierenden, durch nämliche Grenzfläche insgesamt hindurchtretenden und weiter zur zweiten Temperaturmeßstelle fließenden Wärmestrom ein zweiter Wärmewiderstand, R2, entgegenwirken. Das das Rohr umhüllende Fluidvolumen wiederum kontaktiert den ersten Temperatursensor (über eine dem Zwischenraum zugewandte äußere Oberfläche nämlichen Temperatursensors) unter Bildung einer dritten Grenzfläche erster Art sowie den zweiten Temperatursensor (über eine dem Zwischenraum zugewandte äußere Oberfläche nämlichen Temperatursensors) unter Bildung einer vierten Grenzfläche erster Art, derart, daß einem aus einer zwischen der dritten Grenzfläche erster Art und der ersten Temperaturmeßstelle herrschenden Temperaturdifferenz resultierenden, von der ersten Temperaturmeßstelle insgesamt zu nämlicher Grenzfläche fließenden, gleichwohl durch nämliche Grenzfläche insgesamt hindurchtretenden Wärmestrom ein dritter Wärmewiderstand, R3, und einem aus einer zwischen der vierten Grenzfläche erster Art und der zweiten Temperaturmeßstelle herrschenden Temperaturdifferenz resultierenden, von der zweiten Temperaturmeßstelle insgesamt zu nämlicher Grenzfläche fließenden, gleichwohl durch nämliche Grenzfläche insgesamt hindurchtretenden Wärmestrom ein vierter Wärmewiderstand, R4, entgegenwirken. Bei der erfindungsgemäßen Wandlervorrichtung sind der erste Wärmewiderstand, R1, der zweite Wärmewiderstand, R2, der dritte Wärmwiderstand, R3, sowie der vierte Wärmwiderstand, R4, aufeinander abgestimmt so bemessen, daß insgesamt eine Bedingung

$$0,005 < \frac{1+\dfrac{R4}{R2}}{1+\dfrac{R3}{R1}} < 1$$

erfüllt ist.

Darüberhinaus besteht die Erfindung auch in einem Meßsystem zum Messen wenigstens einer Meßgröße, beispielsweise nämlich einer Temperatur, einer Dichte und/oder einer Viskosität, eines strömenden Fluids, beispielsweise eines Gases, einer Flüssigkeit oder einer fließfähigen Dispersion, welches Meßsystem eine, beispeislweise mittels eines Mikroprozessors gebildete, Meß- und Betriebs-Elektronik und zum Führen des Fluids eine vorbezeichnte erfindungsgemäße Wandlervorrichtung umfaßt.

Nach einer ersten Ausgestaltung der Wandlervorrichtung der Erfindung ist vorgesehen, daß der erste Wärmewiderstand, R1, kleiner als 1000 K/W ist, und der Wärmewiderstand, R2, kleiner als 1000 K/W ist.

Nach einer zweiten Ausgestaltung der Wandlervorrichtung der Erfindung ist vorgesehen, daß der erste Wärmewiderstand, R1, kleiner als 30 K / W, insb. kleiner als 25 K / W, ist.

Nach einer dritten Ausgestaltung der Wandlervorrichtung der Erfindung ist vorgesehen, daß der dritte Wärmwiderstand, R3, und der vierte Wärmwiderstand, R4, eine Bedingung R3 = R4 erfüllen.

Nach einer vierten Ausgestaltung der Wandlervorrichtung der Erfindung ist vorgesehen, daß der erste Wärmewiderstand, R1, der zweite Wärmewiderstand, R2, der dritte Wärmwiderstand, R3, sowie der vierte Wärmwiderstand, R4, insgesamt eine Bedingung

$$\frac{1+\dfrac{R4}{R2}}{1+\dfrac{R3}{R1}} < 0,9$$

erfüllen.

Nach einer fünften Ausgestaltung der Wandlervorrichtung der Erfindung ist vorgesehen, daß der erste Wärmewiderstand, R1, der zweite Wärmewiderstand, R2, der dritte Wärmwiderstand, R3, sowie der vierte Wärmwiderstand, R4, insgesamt eine Bedingung

$$\frac{1+\dfrac{R4}{R2}}{1+\dfrac{R3}{R1}} > 0,01$$

erfüllen.

Nach einer sechsten Ausgestaltung der Wandlervorrichtung der Erfindung ist vorgesehen, daß der erste Kopplungskörper zumindest anteilig, beispielsweise auch überwiegend oder gänzlich, aus einem Material, etwa einem Wärmeleitkleber, besteht, von dem eine spezifische Wärmeleitfähigkeit, $\lambda712$, größer als eine spezifische Wärmeleitfähigkeit, $\lambda F$, des im Zwischenraum gehaltenen Fluids und/oder größer als 1 W / (m · K) ist, und von dem eine spezifische Wärmekapazität, $cp712$, kleiner als eine spezifische Wärmekapazität, $cpF$, des im Zwischenraum vorgehaltenen Fluids und/oder kleiner als 2000 J / (kg · K), ist, beispielsweise auch derart, daß ein Verhältnis, $\lambda712 / \lambda F$, der spezifische Wärmeleitfähigkeit, $\lambda712$, nämlichen Materials zur spezifischen Wärmeleitfähigkeit, $\lambda F$, des im Zwischenraum vorge-

haltenen Fluids größer als 2 ist, und/oder daß ein Verhältnis, cp712 / cpF, der spezifische Wärmekapazität, cp712, nämlichen Materials zur spezifischen Wärmekapazität, cpF, des im Zwischenraum gehaltenen Fluids kleiner als 1,5 ist. Diese Ausgestaltung der Erfindung weiterbildend ist ferner vorgesehen, daß der zweite Kopplungskörper zumindest anteilig, beispielsweise auch überwiegend oder gänzlich, aus einem Material, etwa einem Metall, besteht, von welchem Material eine spezifische Wärmeleitfähigkeit, λ2, größer als die spezifische Wärmeleitfähigkeit, λ1, des Materials des ersten Kopplungskörpers und/oder größer als 10 W / (m · K) ist, und/oder von welchem Material eine spezifische Wärmekapazität, cp2, kleiner als die spezifische Wärmekapazität, cp1, des Materials des ersten Kopplungskörpers und/oder kleiner 1000 J / (kg · K) ist.

Nach einer siebenten Ausgestaltung der Wandlervorrichtung der Erfindung ist vorgesehen, daß der dritte Wärmewiderstand, R3, größer als 500 K / W, insb. größer als 5000 K / W, ist.

Nach einer achten Ausgestaltung der Wandlervorrichtung der Erfindung ist vorgesehen, daß der dritte Wärmewiderstand, R3, kleiner als 20000 K/W, insb. kleiner als 10000 K/W, ist.

Nach einer neunten Ausgestaltung der Wandlervorrichtung der Erfindung ist vorgesehen, daß der vierte Wärmewiderstand, R4, größer als 500 K/W, insb. größer als 5000 K/W, ist.

Nach einer zehnten Ausgestaltung der Wandlervorrichtung der Erfindung ist vorgesehen, daß der vierte Wärmewiderstand, R4, kleiner als 20000 K/W, insb. kleiner als 10000 K/W, ist.

Nach einer elften Ausgestaltung der Wandlervorrichtung der Erfindung ist vorgesehen, daß der erste Temperatursensor mittels eines den ersten Temperaturfühler thermisch mit dem im Zwischenraum gebildeten Fluidvolumen koppelnden dritten Kopplungskörpers, der nämliches Fluidvolumen unter Bildung der dritten Grenzfläche erster Art kontaktiert, gebildet ist. Nämlicher Kopplungskörper kann beispielsweise mittels eines auf dem ersten Temperaturfühler applizierten Kunststoffs, mittels eines auf dem ersten Temperaturfühler applizierten Gewebeband bzw. mittels eines auf dem ersten Temperaturfühler applizierten Metallblech gebildet sein. Diese Ausgestaltung der Erfindung weiterbildend ist ferner vorgesehen, daß der zweite Temperatursensor mittels eines den zweiten Temperaturfühler thermisch mit dem im Zwischenraum gebildeten Fluidvolumen koppelnden, beispielsweise zum dritten Kopplungskörper baugleichen, vierten Kopplungskörpers, der nämliches Fluidvolumen unter Bildung der vierten Grenzfläche erster Art kontaktiert, gebildet ist. Auch der vierte Kopplungskörper kann beispielsweise mittels eines auf dem ersten Temperaturfühler applizierten Kunststoffs, mittels eines auf dem ersten Temperaturfühler applizierten Gewebeband bzw. mittels eines auf dem ersten Temperaturfühler applizierten Metallblech gebildet sein.

Nach einer zwölften Ausgestaltung der Wandlervorrichtung der Erfindung ist vorgesehen, daß dem ersten Kopplungskörper eine Wärmekapazität, C1, innewohnt, die kleiner als 200 J / K, insb. kleiner als 100 J / K, ist, und daß dem zweiten Kopplungskörper eine Wärmekapazität, C2, innewohnt, die kleiner als 200 J / K, insb. kleiner als 100 J / K, ist, beispielsweise derart, daß die Wärmekapazität, C1, des ersten Kopplungskörpers und die zweite Wärmekapazität, C2, des zweiten Kopplungskörpers insgesamt eine Bedingung $\frac{1}{10} < \frac{C1}{C2} < 1$ erfüllen. Diese Ausgestaltung der Erfindung weiterbildend ist ferner vorgesehen, daß die Wärmekapazität, C1, des ersten Kopplungskörpers und die zweite Wärmekapazität, C2, des zweiten Kopplungskörpers eine insgesamt Bedingung $\frac{1}{1000} < \frac{C1}{C2} < 1$, insb. auch eine Bedingung $0,01 < \frac{C1}{C2} < 0,9$, erfüllen.

Nach einer dreizehnten Ausgestaltung der Wandlervorrichtung der Erfindung ist vorgesehen, daß die Wandung des Rohrs eine Wanddicke aufweist, die mehr als 0,5 mm und/oder weniger als 10 mm beträgt.

Nach einer vierzehnten Ausgestaltung der Wandlervorrichtung der Erfindung ist vorgesehen, daß das Rohr einen Innendurchmesser aufweist, der mehr als 0,5 mm und/oder weniger als 200 mm beträgt.

Nach einer fünfzehnten Ausgestaltung der Wandlervorrichtung der Erfindung ist das Rohr so bemessen, daß es ein Innendurchmesser-zu-Wandstärke-Verhältnis, definierte als ein Verhältnis eines Innendurchmesser des Rohrs zu einer Wanddicke der Wandung des Rohrs, aufweist, das weniger als 25:1 und/oder mehr als 5:1 beträgt.

Nach einer sechzehnten Ausgestaltung der Wandlervorrichtung der Erfindung ist vorgesehen, daß der erste Temperatursensor, beispielsweise mittels eines Wärmeleitklebers, unter Bildung des ersten Kopplungskörpers stoffschlüssig, beispielsweise adhäsiv, mit der Mantelfläche der Wandung des Rohrs verbunden ist.

Nach einer siebzehnten Ausgestaltung der Wandlervorrichtung der Erfindung ist vorgesehen, daß der erste Kopplungskörper, beispielsweise auch gänzlich, mittels eines zwischen der Wandung des Rohrs und dem ersten Temperaturfühler plazierten, beispielsweise sowohl die Mantelfläche der Wandung als auch den ersten Temperaturfühler kontaktierenden und/oder mit Metalloxid-Partikeln versetzten, Kunststoffs, wie z.B. einem Epoxidharz oder einem Silikon, gebildet ist. Diese Ausgestaltung der Erfindung weiterbildend ist ferner vorgesehen, daß der Kunststoff ein, beispielsweise 1-komponentiger oder 2-komponentiger, Silikonkautschuk, wie z.B. DELO-GUM® 3699 von DELO Industrie Klebstoffe GmbH & Co KGaA, 86949 Windach, DE, ist.

Nach einer achtzehnten Ausgestaltung der Wandlervorrichtung der Erfindung ist vorgesehen, daß der zweite Kopplungskörper mittels einer zwischen der Wandung des Rohrs und dem zweiten Temperaturfühler plazierten, aus einem Metall bzw. einer Legierung, insb. einem Stahl, bestehenden, z.B. mit der Wandung des Rohrs stoffschlüssig verbundenen und/oder ringförmigen und/oder das Rohr umgreifenden, Scheibe gebildet ist. Diese Ausgestaltung der Erfindung weiterbildend ist ferner vorgesehen, daß die Scheibe eine, insb. kreisförmige, Durchgangsöffnung mit einer der Mantelfläche der Wandung des Rohrs zugewandten Innenfläche aufweist.

Nach einer neunzehnten Ausgestaltung der Wandlervorrichtung der Erfindung ist vorgesehen, daß erste Temperatursensor und der zweite Temperatursensor bezogen auf eine Längsachse des Rohrs azimutal voneinander beabstandet sind.

Nach einer zwanzigsten Ausgestaltung der Wandlervorrichtung der Erfindung ist vorgesehen, daß erste Temperatursensor und der zweite Temperatursensor bezogen auf einen Längsachse des Rohrs axial beabstandet sind, beispielsweise derart, daß das Rohr keine in der Mantelfläche liegende gedachte, kreisförmige Umfangslinie aufweist, entlang der sowohl der erste Temperatursensor als auch der zweite Temperatursensor positioniert sind.

Nach einer einundzwanzigsten Ausgestaltung der Wandlervorrichtung der Erfindung ist vorgesehen, daß das Rohr zumindest abschnittsweise, beispielsweise auch überwiegend oder gänzlich, gerade, beispielsweise nämlich kreiszylindrisch, ist.

Nach einer zweiundzwanzigsten Ausgestaltung der Wandlervorrichtung der Erfindung ist vorgesehen, daß das Rohr zumindest abschnittsweise, beispielsweise kreisbogenförmig, gekrümmt ist.

Nach einer dreiundzwanzigsten Ausgestaltung der Wandlervorrichtung der Erfindung ist vorgesehen, daß die Wandung des Rohrs zumindest anteilig, beispielsweise überwiegend oder gänzlich, aus einem Material, beispielsweise nämlich einem Metall oder einer Legierung, besteht, von dem eine spezifische Wärmeleitfähigkeit, $\lambda 10$, größer als 10 W/ (m · K), ist und von dem eine spezifische Wärmekapazität, $cp1$, kleiner als 1000 J / (kg · K) ist.

Nach einer vierundzwanzigsten Ausgestaltung der Wandlervorrichtung der Erfindung ist vorgesehen, daß die Wandung des Rohrs aus einem Metall bzw. einer Legierung, insb. Stahl, Titan, Zirkonium, Tantal, besteht.

Nach einer fünfundzwanzigsten Ausgestaltung der Wandlervorrichtung der Erfindung ist das Rohr dafür eingerichtet, mechanische Schwingungen um eine zugehörige statische Ruhelage auszuführen.

Nach einer sechsundzwanzigsten Ausgestaltung der Wandlervorrichtung der Erfindung ist das Rohr weiters dafür eingerichtet, vom Fluid durchströmt und währenddessen vibrieren gelassen zu werden, beispielsweise auch derart, daß das Rohr mechanische Schwingungen um eine diesem zugehörige statische Ruhelage ausführt, die geeignet sind, im strömenden Fluid von einer Massendurchflußrate abhängige Corioliskräfte zu induzieren, und/oder daß das Rohr mechanische Schwingungen um eine diesem zugehörige statische Ruhelage ausführt, die geeignet sind, im Fluid von einer von einer Viskosität des Fluids abhängige Reibungskräfte zu induzieren, und/oder daß das Rohr mechanische Schwingungen um eine diesem zugehörige statische Ruhelage ausführt, die geeignet sind, im Fluid von einer Dichte des Fluids abhängige Trägheitskräfte zu induzieren.

Nach einer Weiterbildung der Wandlervorrichtung der Erfindung umfaßt diese weiters einen Schwingungserreger zum Anregen und Aufrechterhalten von mechanischen Schwingungen des wenigstens einen Rohrs um eine zugehörige statische Ruhelage, sowie einen Schwingungssensor zum Erfassen von mechanischen Schwingungen des wenigstens einen Rohrs.

Nach einer ersten Ausgestaltung des Meßsystems der Erfindung umfaßt die Wandlervorrichtung weiters einen Schwingungserreger zum Anregen und Aufrechterhalten von mechanischen Schwingungen des wenigstens einen Rohrs um eine zugehörige statische Ruhelage, sowie einen Schwingungssensor zum Erfassen von mechanischen Schwingungen des wenigstens einen Rohrs, und ist zudem die Meß- und Betriebs-Elektronik dafür eingerichtet, zum Anregen von mechanischen Schwingungen des Rohrs ein den Schwingungserreger treibendes Erregersignal zu generieren. Diese Ausgestaltung der Erfindung weiterbildend ist der Schwingungserreger ferner dafür eingerichtet, mittels des Erregersignals mechanische Schwingungen des Rohrs anzuregen bzw. aufrecht zu erhalte.. Ferner ist der Schwingungssensor dafür eingerichtet, ein Schwingungen des wenigstens einen Rohrs repräsentierendes Schwingungssignal zu liefern, und ist die Meß- und Betriebs-Elektronik dafür eingerichtet, unter Verwendung sowohl des ersten Temperaturmeßsignals als auch des zweiten Temperaturmeßsignals sowie des Schwingungssignals einen Dichte-Meßwert, nämlich einen eine Dichte des Fluids repräsentierenden Meßwert, zu generieren.

Nach einer zweiten Ausgestaltung des Meßsystems der Erfindung ist die Meß- und Betriebs-Elektronik dafür eingerichtet, unter Verwendung sowohl des mittels der Wandlervorrichtung generierten ersten Temperaturmeßsignals als auch des mittels der Wandlervorrichtung generierten zweiten Temperaturmeßsignals einen Meßwert zu generieren, der die wenigstens eine Meßgröße, x, repräsentiert.

Nach einer dritten Ausgestaltung des Meßsystems der Erfindung ist die Meß- und Betriebs-Elektronik dafür eingerichtet, unter Verwendung sowohl des ersten Temperaturmeßsignals als auch des zweiten Temperaturmeßsignals wenigstens einen eine Ziel-Temperatur, nämlich eine Temperatur an einem für das Meßsystem vorgegebenen innerhalb der Wandlervorrichtung festgelegten, beispielsweise sowohl vom ersten Temperatursensor als auch vom zweiten Temperatursensor entfernten und/oder innerhalb des Rohrs lokalisierten, Vorrichtungsreferenzpunkt repräsentierenden Temperatur-Meßwert zu generieren. Dies Ausgestaltung der Erfindung weiterbildend ist ferner vorgesehen, daß der Vorrichtungsbezugspunkt (poi) innerhalb der Wandlervorrichtung, beispielsweise nämlich in der Wandung des Rohrs oder im Lumen des Rohrs, lokalisiert ist, etwa auch derart, daß der Temperatur-Meßwert eine Rohrtemperatur, nämlich eine von der Wandung des Rohrs angenommene Temperatur, repräsentiert, bzw. derart, daß der Temperatur-Meßwert eine Meßfluid-Temperatur, nämlich eine Temperatur des innerhalb des Lumens geführten Fluids repräsentiert.

Ein Grundgedanke der Erfindung besteht darin, einen - in herkömmlichen Meßsystemen der in Rede stehenden Art, nicht zuletzt auch in herkömmlichen vibronischen Meßsystemen, bei der Ermittlung der Meßwerte für eine jeweilige Ziel-Temperatur, beispielsweise nämlich einer Rohrtemperatur und/oder einer Meßfluidtemperatur, bzw. auch bei der Ermittlung von Meßwerten für die Dichte und/oder die Viskosität bis anhin nicht berücksichtigten - Einfluß einer zwischen der Meßfluidtemperatur bzw. der Rohrtemperatur einerseits und der Rohrumgebungstemperatur anderseits existierenden, regelmäßig zudem auch über einen weiten Temperaturbereich schwankenden Temperaturdifferenz dadurch in für eine Messung bzw. meßtechnische Verarbeitung zugänglichen Weise zu erfassen, indem zwei thermisch gut, gleichwohl unterschiedlich stark an das Rohr der Wandlervorrichtung und/oder unterschiedlich stark an das das Rohr umgebende Fluidvolumen gekoppelte Temperatursensoren verwendet werden, so daß im Ergebnis - bei nominell gleichen über den Temperatursensoren abfallenden Temperaturdifferenzen - die mittels des ersten der beiden Temperatursensoren gebildete Temperaturmeßstelle eine Meßstellentemperatur annimmt, die von einer Meßstellentemperatur der mittels des zweiten der beiden Temperatursensoren gebildeten Temperaturmeßstelle abweicht. In Kenntnis der durch den jeweiligen konstruktiven Aufbau der beiden Temperatursensoren bedingten, mithin vorab sehr genau bekannten Größen bzw. Verhältnisse der für die Wärmeleitungsvorgänge durch die Temperatursensoren jeweils relevanten Wärmewiderstände kann anhand der so erzwungenen Abweichung der beiden Meßstellentemperaturen voneinander hernach die zwischen der Meßfluidtemperatur und der Rohrumgebungstemperatur existierende Temperaturdifferenz bzw. basierend darauf die jeweilige Ziel-Temperatur, beispielsweise nämlich die Rohrtemperatur oder auch die Meßfluidtemperatur, genau ermittelt werden.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich. Im einzelnen zeigen:

Fig. 1 schematisch ein Ausführungsbeispiel für ein, insb. für die Verwendung in der industriellen Meß- und Automatisierungstechnik geeignetes, Meßsystem mit einer ein Wandler-Gehäuse aufweisenden Wandlervorrichtung und einer in einem - hier direkt am Wandler-Gehäuse befestigten - Elektronik-Gehäuse untergebrachten Meß- und Betriebs-Elektronik;

Fig. 2, 3 in unterschiedlichen geschnittenen Seitenansichten Ausführungsbeispiele einer für ein Meßsystem gemäß Fig. 1 geeigneten Wandlervorrichtung mit einem Rohr und mit zwei daran befestigten, die Wandung des Rohrs kontaktierenden Temperatursensoren;

Fig. 4, 5 in perspektivischer bzw. geschnittener Seitenansicht ein für eine Wandlervorrichtung gemäß Fig. 2 bzw. 3, mithin für ein Meßsystem gemäß Fig. 1 geeignetes Rohr mit zwei daran befestigten Temperatursensoren;

Fig. 6 ein mittels einer Vielzahl diskreter Wärmewiderstände nach Art eines Ersatzschaltbildes gebildetes, der Erklärung von in einer Wandlervorrichtung gemäß Fig. 2, 3 fließenden Wärmströme bzw. entsprechender Temperaturabfälle innerhalb nämlicher Wandlervorrichtung dienendes Widerstandsnetzwerk;

Fig. 7, 8 in unterschiedlichen geschnittenen Seitenansichten weitere Ausführungsbeispiele einer für ein Meßsystem gemäß Fig. 1 geeigneten Wandlervorrichtung mit einem Rohr;

Fig. 9 in einem Diagramm Abhängigkeiten von in einer in einer Wandlervorrichtung gemäß Fig. 2, 3 bzw. 7, 8 mittels deren jeweiligen Temperatursensoren erfaßten Meßstellentemperaturen (bzw. davon abgeleiteten Temperaturmeßsignalen) von einer Rohrtemperatur und einer Rohrumgebungstemperatur bzw. von einer dazwischen existierenden Temperaturdifferenz; und

Fig. 10 ein mittels einer Vielzahl diskreter Wärmewiderstände nach Art eines Ersatzschaltbildes gebildetes, der Erklärung von in einer Wandlervorrichtung gemäß Fig. 2, 3 bzw. 7, 8, einschließlich des Rohrs, fließenden Wärmströme bzw. entsprechender Temperaturabfälle dienendes Widerstandsnetzwerk.

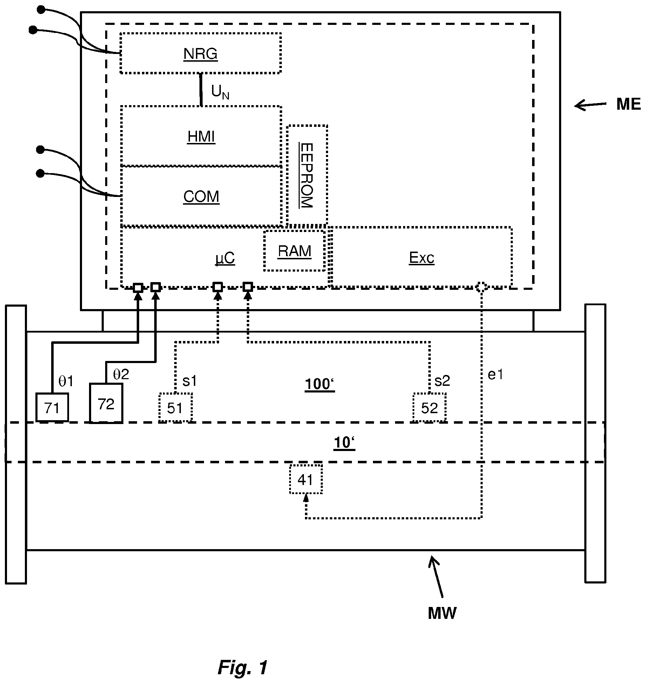

In Fig. 1 ist schematisch ein Meßsystem zum Messen wenigstens einer Meßgröße x eines eine, ggf. auch zeitlich veränderliche Meßfluidtemperatur $\vartheta_{FL1}$ aufweisenden strömenden Fluids FL1 (Meßfluid), wie z.B. eines Gases, einer Flüssigkeit oder einer fließfähigen Dispersion, bzw. zum wiederkehrenden Ermitteln von nämliche Meßgröße momentan repräsentierenden Meßwerten $X_x$ schematisch dargestellt. Meßgröße x kann beispielsweise eine Dichte oder eine Viskosität, mithin eine solche Meßgröße sein, die selbst eine gewisse Abhängigkeit von der jeweiligen Meßfluidtemperatur aufweist und/oder bei deren Umwandlung in den jeweiligen Meßwert $X_x$ die Wandlervorrichtung einen temperaturabhängigen Meßfehler provoziert; Meßgröße kann aber beispielsweise auch eine - im weiteren auch als Ziel-Temperatur bezeichnete - interessierende Temperatur an einem für das Meßsystem vorgegebenen, gleichwohl innerhalb der Wandlervorrichtung lokalisierten Vorrichtungsreferenzpunkt (poi) sein. Das Meßsystem umfaßt dafür eine Wandlervorrichtung MW zum Erzeugen von von der wenigstens einen Meßgröße abhängigen Meßsignalen sowie eine mit dieser elektrisch verbundene, insb. im Betrieb von extern via Anschlußkabel und/oder mittels interner Energiespeicher mit elektrischer Energie versorgte, Meß- und Betriebs-Elektronik ME zum Erzeugen der die mittels der Wandlervorrichtung erfaßte Meßgröße(n) repräsentierenden Meßwerte bzw. zum sequentiellen Ausgeben solcher Meßwerte als einen jeweils aktuell gültigen Meßwert des Meßsystems an einem entsprechenden Meßausgang. Die, z.B. mittels wenigstens eines Mikroprozessors und/oder mittels eines digitalen Signalprozessors (DSP) gebildete, Meß- und Betriebs-Elektronik ME kann, wie in den Fig. 1 angedeutet, beispielsweise in einem einzigen, ggf. auch gekammerten, Elektronik-Gehäuse 200 des Meßsystems untergebracht sein. Nämliches Elektronik-Gehäuse 200 kann je nach Anforderung an das Meßsystem beispielsweise auch schlag- und/oder auch explosionsfest und/oder hermetisch dicht ausgebildet sein. Die Meßgerät-Elektronik ME weist, wie auch in Fig. 1 schematisch nach Art eines Blockschaltbildes dargestellt, eine Meßsignale der Wandlervorrichtung MW verarbeitende, beispielsweise mittels eines Mikroprozessors gebildete, Auswerte-Schaltung µC auf, die im Betrieb die entsprechende Meßwerte für die mittels des Meßsystems zu erfassenden Meßgröße generiert. Die mittels der Meß- und Betriebs-Elektronik ME generierten Meßwerte $X_x$ können beim hier gezeigten Meßsystem beispielsweise vor Ort, nämlich unmittelbar an der mittels des Meßsystems gebildeten Meßstelle, angezeigt werden. Zum Visualisieren von mittels des Meßsystems erzeugten Meßwerten und/oder gegebenenfalls Meßgerät intern generierten Systemstatusmeldungen, wie etwa einer erhöhte Meßungenauigkeit bzw. -unsicherheit signalisierende Fehlermeldung oder einem eine Störung im Meßsystem selbst oder an der mittels des Meßsystems gebildeten Meßstelle signalisierenden Alarm, vor Ort kann das Meßsystem, wie auch Fig. 1 angedeutet, beispielsweise ein mit der Meß- und Betriebs-Elektronik kommunizierendes, ggf. auch portables, Anzeige- und Bedienelement HMI aufweisen, wie etwa ein im Elektronik-Gehäuse 200 hinter einem darin entsprechend vorgesehenen Fenster plaziertes LCD-, OLED- oder TFT-Display sowie eine entsprechende Eingabetastatur und/oder ein Touchscreen. In vorteilhafter Weise kann die, beispielsweise auch (re-)programmier- bzw. fernparametrierbare, Meß- und Betriebs-Elektronik ME zudem so ausgelegt sein, daß sie im Betrieb des Meßsystems mit einem diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem, wie etwa FOUNDATION FIELDBUS, PROFIBUS, und/oder drahtlos per Funk, Meß- und/oder andere Betriebsdaten austauschen kann, wie etwa aktuelle Meßwerte, Systemdiagnosewerte, Systemstatusmeldungen oder aber auch der Steuerung des Meßsystems dienende Einstellwerte. Die Meß- und Auswerteschaltung µC der Meß- und Betriebs-Elektronik kann beispielsweise mittels eines wenigstens einen Mikroprozessor und/oder einen digitalen Signalprozessor (DSP) aufweisenden Mikrocomputers realisiert sein. Die davon auszuführenden Programm-Codes wie auch der Steuerung des jeweiligen Meßsystems dienliche Betriebsparameter, wie z.B. auch Sollwerte für mittels der Meß- und Betriebs-Elektronik realisierte Regler bzw. Regleralgorithmen, können - wie auch in der Fig. 1 schematisch dargestellt -, z.B. in einem nicht-flüchtigen Datenspeicher EEPROM der Meß- und Betriebs-Elektronik ME persistent gespeichert sein und beim Starten desselben in einen, z.B. im Mikrocomputer integrierten, flüchtigen Datenspeicher RAM geladen werden. Für derartige Anwendungen geeignete Mikroprozessoren sind z.B. solche vom Typ TMS320VC33, wie sie von der Firma Texas Instruments Inc. am Markt angeboten sind.

Des weiteren kann die Meß- und Betriebs-Elektronik ME so ausgelegt sein, daß sie von einer externen Energieversorgung, beispielsweise auch über das vorgenannte Feldbussystem, gespeist werden kann. Dafür kann die Meß- und Betriebs-Elektronik ME beispielsweise eine solche interne Energieversorgungsschaltung NRG zum Bereitstellen interner Versorgungsspannungen $U_N$ aufweisen, die im Betrieb von einer im vorgenannten Datenverarbeitungssystem vorgesehenen externen Energieversorgung über das vorgenannte Feldbussystem gespeist wird. Hierbei kann das Meßsystem beispielsweise als sogenanntes Vierleitergerät ausgebildet sein, bei dem die interne Energieversorgungsschaltung der Meßgerät-Elektronik ME mittels eines ersten Paars Leitungen mit einer externen Energieversorgung und die interne Kommunikationsschaltung der Meß- und Betriebs-Elektronik ME mittels eines zweiten Paars Leitungen mit einer externen Datenverarbeitungsschaltung oder einem externen Datenübertragungssystem verbunden werden kann. Die Meß- und Betriebs-Elektronik kann ferner aber auch so ausgebildet sein, daß sie, wie u.a auch in der eingangs erwähnten US-B 72 00 503, die US-B 77 92 646 gezeigt, mittels einer, beispielsweise als 4-20 mA-Stromschleife konfigurierten, Zweileiter-Verbindung mit dem externer elektronischen Datenverarbeitungssystem elektrisch verbindbar ist und darüber mit elektrischer Energie versorgt wird sowie Meßwerte zum Datenverarbeitungssystem übertragen kann.

Für den typischen Fall, daß das Meßsystem für eine Ankopplung an ein Feldbus- oder ein anderes elektronisches Kommunikationssystem vorgesehen ist, kann die, beispielsweise auch vor Ort und/oder via Kommunikationssystem (re-)programmierbare, Meß- und Betriebs-Elektronik ME zu dem eine entsprechende - beispielsweise einem der einschlägigen Industriestandards, wie etwa der IEC 61158/IEC 61784, konforme - Kommunikations-Schnittstelle COM für eine Datenkommunikation aufweisen, z.B. zum Senden von Meß- und/oder Betriebsdaten, mithin den die jeweilige Meßgröße repräsentierenden Meßwerte an die bereits erwähnte speicherprogrammierbare Steuerung (SPS) oder ein übergeordnetes Prozeßleitsystem und/oder zum Empfangen von Einstelldaten für das Meßsystem. Das elektrische Anschließen der Wandlervorrichtung an die Meß- und Betriebs-Elektronik kann mittels entsprechender Anschlußleitungen erfolgen, die aus dem Elektronik-Gehäuse 200, beispielsweise via Kabeldurchführung, in das Wandler-Gehäuse 100 geführt und zumindest abschnittsweise auch innerhalb des Wandler-Gehäuses 100 verlegt sind. Die Anschlußleitungen können dabei zumindest anteilig als zumindest abschnittsweise von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, beispielsweise flexiblen bzw. teilweise starren und teilweise flexiblen, gegebenenfalls auch lackierten Leiterplatte gebildet sein, vgl. hierzu auch die eingangs erwähnten US-A 2001/0037690 oder WO-A 96/07081.

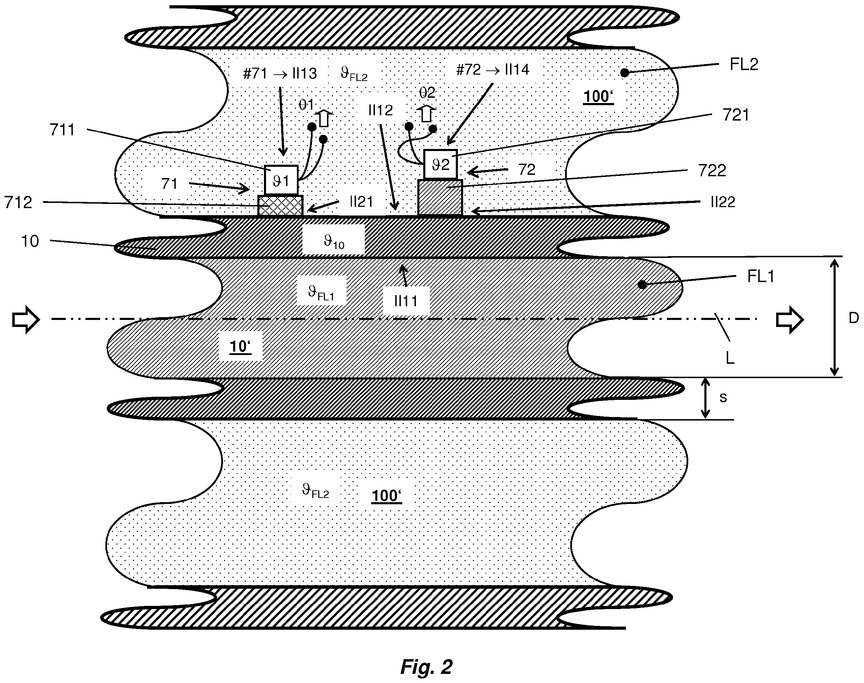

Die Wandlervorrichtung des Meßsystems dient - wie in Fig. 2 schematisch dargestellt bzw. einer Zusammenschau der Fig. 1 und 2 ersichtlich - im besonderen dazu, im Betrieb ein Teilvolumen des jeweils zu messenden Fluid FL1 zu führen bzw. von nämlichem Fluid durchströmt zu werden sowie verschiedene Meßsignale für mittels der Wandlervorrichtung jeweils zu erfassende physikalische Meßgrößen, insb. nämlich für an verschiedenen Meßpunkten innerhalb der Wandlervorrichtung herrschende Meßstellentemperaturen, bereitzustellen. Die Wandlervorrichtung ist dafür mit einem Wandler-Gehäuse 100 sowie einem darin untergebrachten ein von einer, beispielsweise metallischen, Wandung umhülltes Lumen 10' aufweisenden Rohr 10 ausgestattet, wobei das Rohr 10 innerhalb einer von einer, beispielsweise metallischen und/oder als äußere Schutzhülle dienenden, Wandung des Wandler-Gehäuses umhüllten Kavität des Wandler-Gehäuses angeordnet ist, derart, daß zwischen einer nämlicher Kavität zugewandte Innenfläche 100+ der Wandung des Wandler-Gehäuses 100 und einer Mantelfläche 10# der Wandung des Rohrs 10, nämlich einer der Kavität zugewandten Außenfläche der Wandung des Rohrs 10 ein Zwischenraum 100' gebildet ist. Das Rohr 10 ist im besonderen dafür eingerichtet, in dessen Lumen das Fluid FL1 (bzw. ein Teilvolumen davon) zu führen, derart, daß eine dem Lumen zugewandte Innenfläche 10+ der Wandung des Rohrs von im Lumen geführtem Fluid FL1 unter Bildung einer ersten Grenzfläche II11 erster Art, nämlich einer Grenzfläche zwischen einer fluiden und einer festen Phase, kontaktiert ist, wodurch im Ergebnis eine Rohrtemperatur $\vartheta_{10}$, nämlich eine von der Wandung des Rohrs 10 angenommene Temperatur, auch von der Meßfluidtemperatur $\vartheta_{FL1}$ des momentan im Lumen befindlichen Fluids FL1 mitbestimmt ist.

Die Wandlervorrichtung kann ferner als ein Meßwandler vom Vibrationstyp, wie sie beispielsweise in als Coriolis-Massendurchfluß-Meßgerät, als Dichte-Meßgerät und/oder als Viskositäts-Meßgerät ausgebildeten vibronischen Meßsystemen Verwendung finden, bzw. als Komponente eines solchen Meßwandlers ausgebildet sein. Dementsprechend ist das Rohr nach einer weiteren Ausgestaltung der Erfindung ferner dafür eingerichtet, vom Fluid FL1 durchströmt und währenddessen vibrieren gelassen zu werden; dies beispielsweise derart, daß das Rohr mechanischen Schwingungen um eine diesem zugehörige statische Ruhelage ausführt, die geeignet sind, im strömenden Fluid von einer Massendurchflußrate m abhängige Corioliskräfte und/oder im Fluid von einer Viskosität $\eta$ abhängige Reibungskräfte zu induzieren, und/oder im Fluid von einer Dichte $\rho$ abhängige Trägheitskräfte zu induzieren. Nicht zuletzt für diesen Fall ist die Wandlervorrichtung nach einer weiteren Ausgestaltung der Erfindung ferner mit einem Schwingungserreger 41 zum Anregen und Aufrechterhalten von mechanischen Schwingungen des wenigstens einen Rohrs um eine zugehörige statische Ruhelage, sowie wenigstens einem Schwingungssensor 51 zum Erfassen von mechanischen Schwingungen des wenigstens einen Rohrs und zum Generieren eines Schwingungsbewegungen des Rohrs repräsentierenden Schwingungsmeßsignals s1 ausgestattet. Für diesen Fall, daß die Wandlervorrichtung als Meßwandler vom Vibrationstyp bzw. als eine Komponente davon ausgebildet ist, ist in der Meß- und Betriebs-Elektronik ME ferner eine entsprechende, nämlich dem Ansteuern der Wandlervorrichtung dienende, ggf. auch elektrisch mit der Meß- und Auswerte-Schaltung $\mu$C verbundene Treiber-Schaltung Exc vorgesehen, die dafür eingerichtet ist, wenigstens ein elektrisches Treibersignal e1 für einen ggf. in der Wandlervorrichtung vorgesehenen Schwingungserreger bereitzustellen. Im übrigen kann die Meß- und Betriebs-Elektronik für diesen Fall auch so ausgebildet sein, daß sie hinsichtlich des Schaltungsaufbaus einer der aus dem eingangs erwähnten Stand der Technik, beispielsweise etwa der US-B 63 11 136, bekannten Meß- und Betriebs-Elektroniken oder beispielsweise auch einem Meßumformer eines seitens der Anmelderin, z.B. unter der Bezeichnung "PROMASS 83F" bzw. auf "http://www.de.endress.com/#product/83F", angebotenen Coriolis-Massendurchfluß/-Dichte-Meßgeräts entspricht.

Das Rohr 10 der erfindungsgemäßen Wandlervorrichtung kann zumindest abschnittsweise gerade, mithin abschnittsweise (hohl-)zylindrisch, beispielsweise nämlich kreiszylindrisch, und/oder zumindest abschnittsweise gekrümmt, beispielsweise nämlich kreisbogenförmig gekrümmt, ausgebildet sein. Im hier gezeigten Ausführungsbeispiel ist das - hier überwiegend bzw. gänzlich gerade - Rohr, mithin die damit gebildete Wandlervorrichtung ferner dafür eingerichtet, in den Verlauf einer das Fluid führenden, beispielsweise als starre Rohrleitung ausgebildeten, Prozeßleitung eingesetzt zu werden. Im besonderen ist die Wandlervorrichtung ferner dafür vorgesehen, lösbar mit der, beispielsweise als metallische Rohrleitung ausgebildeten, Prozeßleitung montiert zu werden. Dafür sind einlaßseitig der Wandlervorrichtung ein dem Anschluß des Rohrs an ein das Fluid FL1 zuführendes Leitungssegment der Prozeßleitung dienender erster Anschlußflansch 13 und auslaßseitig der Wandlervorrichtung ein dem Anschluß des Rohrs an ein das Fluid wieder abführendes Leitungssegment der Prozeßleitung dienender zweiter Anschlußflansch 14 vorgesehen. Die Anschlußflansche 13, 14 können dabei, wie bei Wandlervorrichtung der in Rede stehenden Art durchaus üblich, auch endseitig in das Wandler-Gehäuse 100 integriert, nämlich als integraler Bestandteil des Wandler-Gehäuses ausgebildet sein.

Gemäß einer weiteren Ausgestaltung der Erfindung ist ferner vorgesehen, daß die Wandung des Rohrs zumindest anteilig - beispielsweise auch überwiegend oder gänzlich - aus einem Material besteht, von dem eine spezifische Wärmeleitfähigkeit $\lambda 10$ größer als 10 W / (m · K) und eine spezifische Wärmekapazität cp10 kleiner als 1000 J / (kg · K) sind. Wie bereits angedeutete, kann nämliche Wandung beispielsweise aus einem Metall bzw. einer Metall-Legierung, beispielweise nämlich Titan, Zirkonium oder Tantal bzw. einer entsprechenden Legierung davon, einem Stahl oder einer Nickelbasislegierung, bestehen. Ferner ist vorgesehen, daß die Wandung des Rohrs gemäß einer weiteren Ausgestaltung der Erfindung eine Wanddicke s, die mehr als 0,5 mm beträgt, und/oder einen Innendurchmesser, der mehr als 0,5 mm beträgt, aufweist. Alternativ oder in Ergänzung ist das Rohr ferner so bemessen, daß es ein Innendurchmesser-zu-Wandstärke-Verhältnis D / s, definiert als ein Verhältnis eines Innendurchmesser D des Rohrs zu einer Wanddicke s der Wandung des Rohrs, aufweist, das weniger als 25:1 beträgt. Gemäß einer weiteren Ausgestaltung der Erfindung ist ferner vorgesehen, daß die Wanddicke weniger als 10 mm und/oder der Innendurchmesser D weniger als 200 mm beträgt bzw. daß das Rohr so bemessen ist, daß das Innendurchmesser-zu-Wandstärke-Verhältnis D / s mehr als 5:1 beträgt.

Zum Erfassen von innerhalb der Wandlervorrichtung herrschenden Meßstellentemperaturen und zum Konvertieren derselben in ein jeweiliges Temperaturmeßsignal umfaßt die erfindungsgemäße Wandlervorrichtung - wie in Fig. 1 bzw. 2 gezeigt - ferner einen ersten Temperatursensor 71 sowie einen zweiten Temperatursensor 72. Der Temperatursensor 71 ist - wie auch in Fig. 2 schematisch dargestellt - mittels eines innerhalb des Zwischenraums 100' angeordneten ersten Temperaturfühler 711 sowie mittels eines nämlichen Temperaturfühler 711 thermisch leitend mit der Wandung des Rohrs koppelnden ersten Kopplungskörper 712 gebildet und zudem dafür eingerichtet, eine erste Meßstellentemperatur $\vartheta 1$, nämlich eine Temperatur an einer mittels des Temperaturfühlers 711 gebildeten ersten Temperaturmeßstelle, in ein erstes Temperaturmeßsignal $\theta 1$, nämlich ein die Meßstellentemperatur $\vartheta 1$ repräsentierendes erstes elektrisches Meßsignal zu wandeln. Analog dazu ist der Temperatursensor 72 der erfindungsgemäßen Wandlervorrichtung mittels eines ebenfalls innerhalb des Zwischenraums 100' angeordneten - beispielsweise auch zum Temperaturfühler 711 baugleichen - zweiten Temperaturfühler 721 sowie mittels eines nämlichen Temperaturfühler 721 thermisch leitend mit der Wandung des Rohrs koppelnden zweiten Kopplungskörper 722 gebildet sowie dafür eingerichtet, eine zweite Meßstellentemperatur $\vartheta 2$, nämlich eine Temperatur an einer mittels des Temperaturfühlers 721 gebildeten zweiten Temperaturmeßstelle, in ein zweites Temperaturmeßsignal $\theta 2$, nämlich ein die Meßstellentemperatur $\vartheta 2$ repräsentierendes zweites elektrisches Meßsignal zu wandeln. Jedes der Temperaturmeßsignale $\theta 1$, $\theta 2$ kann beispielsweise so ausgebildet sein, daß es eine von der jeweiligen Meßstellentemperatur abhängige elektrische Signalspannung und/oder einen von nämlicher Meßstellentemperatur abhängigen elektrischen Signalstrom aufweist. Darüberhinaus ist die Meß- und Betriebs-Elektronik ME nach einer weiteren Ausgestaltung der Erfindung dafür eingerichtet, den wenigstens einen Meßwert $X_x$ unter Verwendung sowohl des mittels der Wandlervorrichtung generierten ersten Temperaturmeßsignals $\theta 1$ als auch zumindest des mittels der Wandlervorrichtung generierten zweiten Temperaturmeßsignals $\theta 2$ zu generieren.

Jeder der beiden Temperaturfühler 711, 721 kann beispielsweise jeweils mittels eines Platin-Meßwiderstandes, eines Thermistors oder eines Thermoelements gebildet sein. Ferner kann jeder der Temperaturfühler 711, 721 mit dem jeweils zugehörigen Kopplungskörper 712 bzw. 722 mittels einer geeigneten stoffschlüssigen Verbindung, beispielsweise nämlich einer Klebeverbindung oder einer Löt- bzw. Schweißverbindung, und/oder durch Einbetten in den jeweiligen Kopplungskörper 712 bzw. 722 verbunden sein.

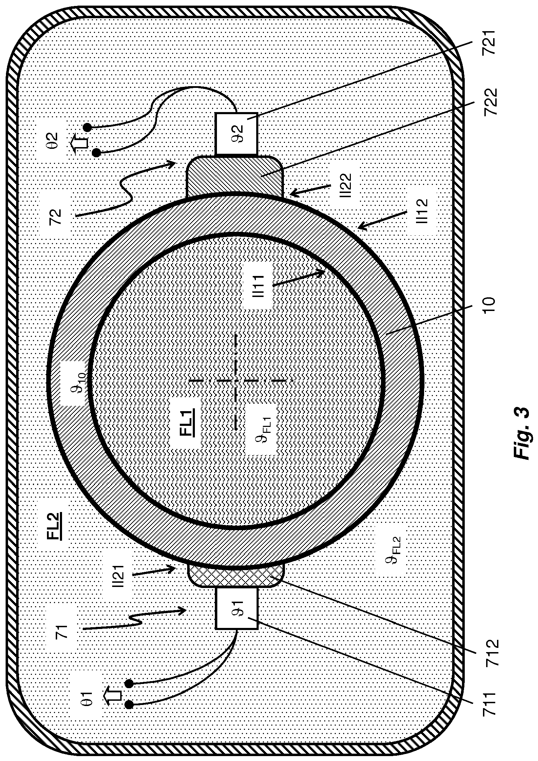

Nach einer weiteren Ausgestaltung der Erfindung sind die beiden Temperatursensoren 71, 72 ferner so positioniert, daß der erste Temperatursensor 71 und der zweite Temperatursensor 72 - wie auch in Fig. 2 gezeigt - bezogen auf eine gedachte Längsachse L des Rohrs bzw. eines geraden Rohrsegments davon axial beabstandet sind, so daß also im Ergebnis das Rohr keine in der Mantelfläche 10# liegende gedachte, kreisförmige Umfangslinie aufweist, entlang der sowohl der erste Temperatursensor als auch der zweite Temperatursensor positioniert sind. Alternativ oder in Ergänzung dazu können die beiden Temperatursensoren ferner auch so positioniert sein, daß der Temperatursensor 71 und der Temperatursensor 72 - wie auch in Fig. 3 angedeutet - bezogen auf nämliche Längsachse L des Rohrs bzw. eines geraden Rohrsegments davon azimutal - beispielsweise nämliche einander diametral gegenüberliegend - voneinander beabstandet sind.

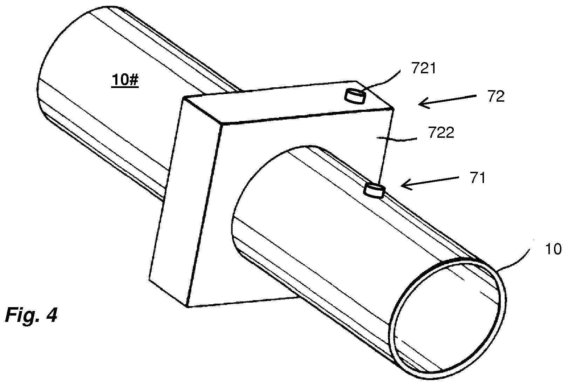

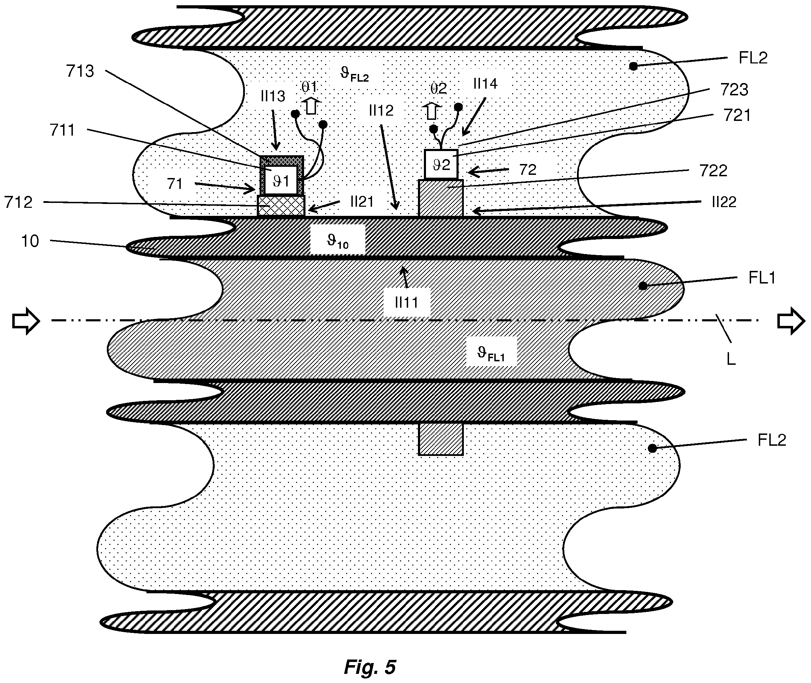

Zwecks Erzielung einer mechanisch festen und beständigen, gleichwohl thermisch gut leitfähigen Verbindung zwischen der Wandung des Rohrs und dem Temperatursensor 71 ist dieser gemäß einer weiteren Ausgestaltung der Erfindung stoffschlüssig mit der Mantelfläche 10# der Wandung des Rohrs 10 verbunden, beispielsweise nämlich adhäsiv oder mittels Löt- bzw. Schweißverbindung. Zum Herstellen einer solchen stoffschlüssigen Verbindung zwischen Rohr 10 und Temperatursensor 71 kann z.B. ein Wärmeleitkleber, mithin ein Kunststoff auf Basis von Epoxidharz oder auf Basis von Silikon, beispielsweise nämlich ein Silikonelastomere oder ein 1- oder 2-komponentiger Silikonkautschuk, wie sie u.a. auch von der Fa. DELO Industrie Klebstoffe GmbH & Co KGaA, 86949 Windach, DE unter der Bezeichnung DELO-GUM® 3699 gehandelt werden, dienen. Der zum Verbinden von Temperatursensor 71 und Rohr 10 verwendete Kunststoff kann zwecks Erzielung einer möglichst guten Wärmeleitung zudem auch mit Metalloxid-Partikeln versetzt sein. Ferner ist es zudem auch möglich, den Kopplungskörper 712 selbst - teilweise oder gänzlich - aus Kunststoff herzustellen, beispielsweise auch in der Weise, daß ein zwischen Temperaturfühler 711 und Wandung plazierter bzw. sowohl die Mantelfläche 10# der Wandung als auch den Temperaturfühler 711 kontaktierendes, ggf. auch monolithisches Kunststoffformteil als Kopplungskörper 712 dient bzw. der gesamte Kopplungskörper 712 aus - beispielsweise ein oder mehrlagig auf die Wandung des Rohrs 10 appliziertem, mithin zwischen der Wandung des Rohrs und dem ersten Temperaturfühler 711 plaziertem - Kunststoff besteht. Darüberhinaus kann auch der Temperatursensor 72 stoffschlüssig mit der Mantelfläche 10# der Wandung des Rohrs 10 verbunden sein, beispielsweise nämlich adhäsiv oder mittels einer Löt- bzw. Schweißverbindung. Dafür besteht der Kopplungskörper 722 gemäß einer weiteren Ausgestaltung der Erfindung zumindest anteilig, beispielsweise auch überwiegend, aus einem Metall, mithin kann der Kopplungskörper 722 aus einem Material hergestellt sein, von dem eine spezifische Wärmeleitfähigkeit $\lambda2$ größer als 10 W / (m · K) bzw. und/oder von dem Material eine spezifische Wärmekapazität $cp722$ kleiner als 1000 J / (kg · K) ist. Ferner können die beiden Kopplungskörper 712, 722 durch entsprechende Auswahl der zu deren jeweiliger Herstellung jeweils tatsächlich verwendeten Materialien ohne weiteres so ausgebildet werden, daß die spezifische Wärmeleitfähigkeit $\lambda722$ eines Materials des zweiten Kopplungskörpers 722 größer als eine spezifische Wärmeleitfähigkeit $\lambda712$ eines Materials des ersten Kopplungskörpers 712 und/oder die spezifische Wärmekapazität $cp722$ des Materials des zweiten Kopplungskörpers 722 kleiner als eine spezifische Wärmekapazität $cp712$ des Materials des ersten Kopplungskörpers 712 ist. Nach einer anderen Ausgestaltung der Erfindung ist auch der zweite Kopplungskörper 722 des Temperatursensors 72 zumindest teilweise aus einem Kunststoff hergestellt bzw. mittels eines entsprechend zwischen dem Temperaturfühler 721 und der Wandung des Rohrs plazierten Kunststoffkörpers gebildet. Alternativ oder in Ergänzung dazu ist gemäß einer weiteren Ausgestaltung der Erfindung vorgesehen, den Kopplungskörper 722 des Temperatursensors 72 - wie auch in Fig. 4 oder 5 angedeutet bzw. aus deren Zusammenschau ohne weiteres ersichtlich - mittels einer zwischen der Wandung des Rohrs 10 und dem Temperaturfühler 721 plazierten, aus einem Metall bzw. einer Metall-Legierung, beispielsweise einem Stahl, bestehenden Scheibe zu bilden. Nämliche Scheibe kann als der Mantelfläche der Wandung des Rohrs angepaßte Durchgangsöffnung aufweisende - beispielsweise im wesentlichen ringförmige oder, wie auch in Fig. 4 schematisch dargestellt, im wesentlichen rechteckige - Scheibe ausgebildet sein, die auf das Rohr aufgeschoben ist, derart, daß die Scheibe das Rohr umgreift bzw. eine der Mantelfläche 10# der Wandung des Rohrs zugewandt Innenfläche der Durchgangsöffnung nämliche Mantelfläche zumindest teilweise kontaktiert. Nicht zuletzt für den vorbeschriebenen Fall, daß die Wandlervorrichtung als ein Meßwandler vom Vibrationstyp bzw. eine Komponente davon ausgebildet ist, kann nämliche Scheibe beispielsweise sowohl als Kopplungskörper 722 des Temperatursensors 72 bzw. als Teil davon, als auch als eine Schwingungsknoten von mechanischen Schwingungen des Rohrs erzwingende Knotenplatte oder aber beispielsweise auch als Halterung auch des erwähnten Schwingungssensors 51 dienen.

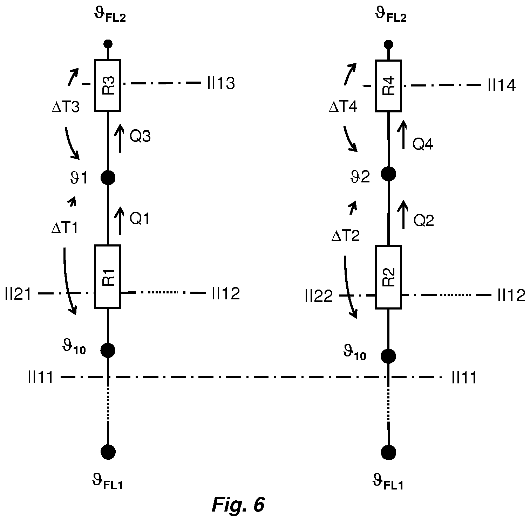

Wie in der Fig. 2 bzw. der Fig. 3 schematisch jeweils dargestellt, sind die beiden Temperatursensoren thermisch an das Rohr gekoppelt, indem der Kopplungskörper 712 des Temperatursensors 71 die Mantelfläche 10# der Wandung des Rohrs unter Bildung einer ersten Grenzfläche II21 zweiter Art, nämlich einer Grenzfläche zwischen zwei festen Phasen, sowie der Kopplungskörper 722 des Temperatursensors 72 die Mantelfläche 10# der Wandung des Rohrs unter Bildung einer zweiten Grenzfläche II22 zweiter Art kontaktieren. Jede der beiden Grenzflächen II21, II22 weist dabei jeweils eine durch die konkrete Bauform des jeweiligen Kopplungskörpers 712 bzw. 722 bedingte, mithin vorgegebenen Flächeninhalt auf. Dementsprechend wirkt somit - wie auch in Fig. 6 anhand eines Ersatzschaltbildes für ein mittels einer Vielzahl diskreter Wärmewiderstände gebildeten Widerstandsnetzwerks vereinfacht dargestellt - einem aus einer zwischen der Grenzfläche II21 zweiter Art und der ersten Temperaturmeßstelle herrschenden Temperaturdifferenz $\Delta T1$ resultierenden, gleichwohl durch nämliche Grenzfläche II21 insgesamt hindurchtretenden und weiter zur ersten Temperaturmeßstelle fließenden Wärmestrom Q1 ein mit der ersten Temperaturmeßstelle thermisch leitend verbundener - hier nämlich vornehmlich durch Wärmeleitung (Konduktion) bestimmter - erster Wärmewiderstand R1 ($R1 = \Delta T1 / Q1$) entgegen, und wirkt somit einem aus einer zwischen der Grenzfläche II22 zweiter Art und der zweiten Tempera- turmeßstelle herrschenden Temperaturdifferenz $\Delta T2$ resultierenden, gleichwohl durch nämliche Grenzfläche II22 insgesamt hindurchtretenden und weiter zur zweiten Temperaturmeßstelle fließenden Wärmestrom Q2, ein mit der zweiten Temperaturmeßstelle thermisch leitend verbundener - hier ebenfalls vornehmlich durch Wärmeleitung bestimmter -- zweiter Wärmewiderstand R2 ($R2 = \Delta T2 / Q2$) entgegen. Um eine möglichst gute thermische Ankopplung des Temperatursensors 71 wie auch des Temperatursensors 72 an die Wandung des Rohrs zu erreichen, ist jeder der Wärmewiderstände R1 und R2 bzw. jeder der Temperatursensoren 71, 72 gemäß einer weiteren Ausgestaltung der Erfindung so dimensioniert, daß jeder der Wärmewiderstände R1 und R2 jeweils kleiner als 1000 K/W ist. Ferner ist zumindest der Wärmewiderstand R1 bzw. der Temperatursensor 71 auch so dimensioniert, daß der Wärmewiderstand R1 kleiner als 30 K / W, insb. kleiner 25 K / W, ist.

Um zu erreichen, daß jeder der Temperatursensoren 71, 72 - wie auch bei dem dem in Fig. 6 gezeigten Ersatzschaltbild zugrundeliegenden (statischen) Berechnungsmodell angenommen - jeweils lediglich eine vergleichsweise geringe, mithin vernachlässigbare thermische Trägheit aufweist bzw. jede der beiden Meßstellentemperaturen jeweils rasch allfälligen Änderungen der Rohrtemperatur $\vartheta_{10}$ folgen kann, bzw. daß umgekehrt jede der beiden Meßstellentemperaturen nicht oder allenfalls in nur geringem Maße von einer Änderungsgeschwindigkeit der Rohrtemperatur $\vartheta_{10}$, nämlich einer Geschwindigkeit, mit der die Rohrtemperatur zeitlich ändert, abhängig ist, ist gemäß einer weiteren Ausgestaltung der Erfindung ferner vorgesehen, jeden der Kopplungskörper 712 und 722 jeweils so auszubilden, daß sowohl dem Kopplungskörper 712 als auch dem Kopplungskörper 722 im Ergebnis jeweils eine Wärmekapazität C1 bzw. C2 innewohnt, die kleiner als 2000 J / K; dies in vorteilhafter Weise ferner so, daß die Wärmekapazität C1 des ersten Kopplungskörpers 712 und die Wärmekapazität C2 des zweiten Kopplungskörpers 722 eine Bedingung

$$\frac{1}{1000} < \frac{C1}{C2} \leq 1$$

erfüllt, und/oder daß zumindest der Kopplungskörper 712 eine spezifische Wärmekapazität, die kleiner als 200 J / (kg · K), möglichst aber auch kleiner als 100 J / (kg · K), ist. Aufgrund des für Temperatursensoren der in Rede stehenden Art typischerweise angestrebten kompakten Aufbaus sowie der typischerweise verwendeten, nämlich thermisch gut leitfähigen Materialien besteht zudem auch ein enger Zusammenhang zwischen Wärmewiderstand und Wärmekapazität des jeweiligen Temperatursensors, derart, daß die jeweilige Wärmekapazität - mithin auch die vorbezeichnete Wärmekapazität C1 bzw. C2 - umso niedriger ausgebildet ist, je niedriger der jeweilige Wärmewiderstand gewählt ist. Dementsprechend kann durch die Bemessung der Wärmewiderstände R1, R2 der Kopplungskörper 712 bzw. 722 in der vorbezeichneten Weise somit zugleich auch erreicht werden, daß jeder der Temperatursensoren 71, 72 jeweils auch nur eine vergleichsweise geringe thermische Trägheit bezüglich der Rohrtemperatur $\vartheta_{10}$ aufweist bzw. jede der beiden Meßstellentemperaturen - wie angestrebt - jeweils rasch allfälligen Änderungen der Rohrtemperatur $\vartheta_{10}$ folgen kann, bzw. umgekehrt, daß jede der beiden Meßstellentemperaturen nicht oder allenfalls in nur geringem Maße von einer Änderungsgeschwindigkeit der Rohrtemperatur $\vartheta_{10}$, nämlich einer Geschwindigkeit, mit der die Rohrtemperatur $\vartheta_{10}$ zeitlich ändert, abhängig ist.

Der zwischen der Innenfläche 100+ der Wandung des Wandler-Gehäuses 100 und der Mantelfläche 10# der Wandung des Rohrs 10 gebildete Zwischenraum 100' ist ferner - wie bei Wandlervorrichtungen der in Rede stehenden Art durchaus üblich und wie in Fig. 2 bzw. 3 jeweils schematisch mittels punktierter Schraffur angedeutet - mit einem, beispielsweise eine spezifische Wärmeleitfähigkeit λF von weniger als 1 W / (m · K) aufweisenden, Fluid FL2 zwecks Bildung eines das Rohr 10 umhüllenden Fluidvolumen gefüllt. Das im Zwischenraum 100' gehaltene Fluid FL2 bzw. das damit gebildete Fluidvolumen weist eine im weiteren als Rohrumgebungstemperatur $\vartheta_{FL2}$ bezeichnete, ggf. auch zeitlich veränderliche Fluidtemperatur auf, die zumindest zeitweise von der Meßfluid-Temperatur $\vartheta_{FL1}$ um mehr als 1 K (Kelvin), insb. zumindest zeitweise um mehr als 5 K, abweicht. Dementsprechend sind nach einer weiteren Ausgestaltung der Erfindung das Wandler-Gehäuse und das Rohr dafür eingerichtet, nämliches Fluid FL2 im Zwischenraum 100' zu halten, derart, daß die dem Zwischenraum 100' zugewandte Mantelfläche 10+ der Wandung des Rohrs unter Bildung einer zweiten Grenzfläche II12 erster Art von im Zwischenraum vorgehaltenem Fluid FL2 kontaktiert, mithin das Rohr an das im Zwischenraum 100' gebildete Fluidvolumen thermisch gekoppelt ist. Als Fluid FL2 kann beispielsweise Luft oder ein inertes Gas, wie z.B. Stickstoff oder ein Edelgas, insb. nämlich Helium, dienen. Im Ergebnis dessen sind auch eine dem Zwischenraum 100' zugewandte äußere Oberfläche des Temperatursensors 71 unter Bildung einer dritten Grenzfläche II13 erster Art (Grenzfläche zwischen einer fluiden und einer festen Phase) sowie eine dem Zwischenraum 100' gleichermaßen zugewandte äußere Oberfläche des Temperatursensors 72 unter Bildung einer vierten Grenzfläche II14 erster Art von im Zwischenraum gehaltenem Fluid FL2 kontaktiert bzw. sind sowohl der Temperatursensor 71 als auch der Temperatursensor 72 an das im Zwischenraum 100' gebildete Fluidvolumen thermisch gekoppelt, derart, daß - wie auch in Fig. 2 bzw. 3 jeweils schematisch dargestellt - einem aus einer zwischen der Grenzfläche II13 erster Art und der ersten Temperaturmeßstelle herrschenden Temperaturdifferenz ΔT3 resultierenden, nämlich von der ersten Temperaturmeßstelle insgesamt zur Grenzfläche II13 fließenden, gleichwohl durch nämliche Grenzfläche II13 insgesamt hindurchtretenden Wärmestrom Q3 ein mit der ersten Temperaturmeßstelle thermisch leitend verbundener - hier nämlich durch Wärmeleitung wie auch an der Grenzfläche II13 auftretende Wärmeströmung (Konvektion) bestimmter - dritter Wärmewiderstand R3 (R3 = ΔT3 / Q3) und einem aus einer zwischen der Grenzfläche II14 erster Art und der zweiten Temperaturmeßstelle herrschenden Temperaturdifferenz ΔT4 resultierenden, nämlich von der zweiten Temperaturmeßstelle insgesamt zur Grenzfläche II14 fließenden, gleichwohl durch nämliche Grenzfläche II14 insgesamt hindurchtretenden Wärmestrom Q4 ein mit der zweiten Temperaturmeßstelle thermisch leitend verbundener - hier ebenfalls durch Wärmeleitung sowie an der Grenzfläche II14 auftretende Wärmeströmung bestimmter - vierter Wärmewiderstand R4 (R4 = ΔT4 / Q4) entgegenwirken. Jeder der Wärmewiderstände R3 und R4 ist in vorteilhafter Weise so bemessen, daß er kleiner als 20000 K / W, insb. kleiner 10000 K / W, ist. Um eine im Vergleich zur thermischen Ankopplung an das Rohr 10 schwächere thermische Ankopplung des Temperatursensors 71 bzw. des Temperatursensors 72 an das im Zwischenraum 100' gebildet Fluidvolumen zu erreichen, nicht zuletzt auch um zu erreichen, daß die damit jeweils erfaßte Meßstellentemperatur $\vartheta_1$ bzw. $\vartheta_2$ möglichst immun gegen - ggf. auch räumlich unterschiedlich ausfallende - schnelle zeitliche Änderungen der Rohrumgebungstemperatur $\vartheta_{FL2}$ ist, bzw. daß die Temperatursensoren bezüglich der Rohrumgebungstemperatur $\vartheta_{FL2}$ möglichst eine größere thermische Trägheit als bezüglich der Rohrtemperatur $\vartheta_{10}$ aufweisen, ist der Temperatursensor 71 bzw. ist der Temperatursensor 72 nach einer weiteren Ausgestaltung der Erfindung ferner so ausgebildet, daß der Wärmewiderstand R3 bzw. der Wärmewiderstand R4 mehr als 500 K / W, insb. mehr als 5000 K / W, beträgt.

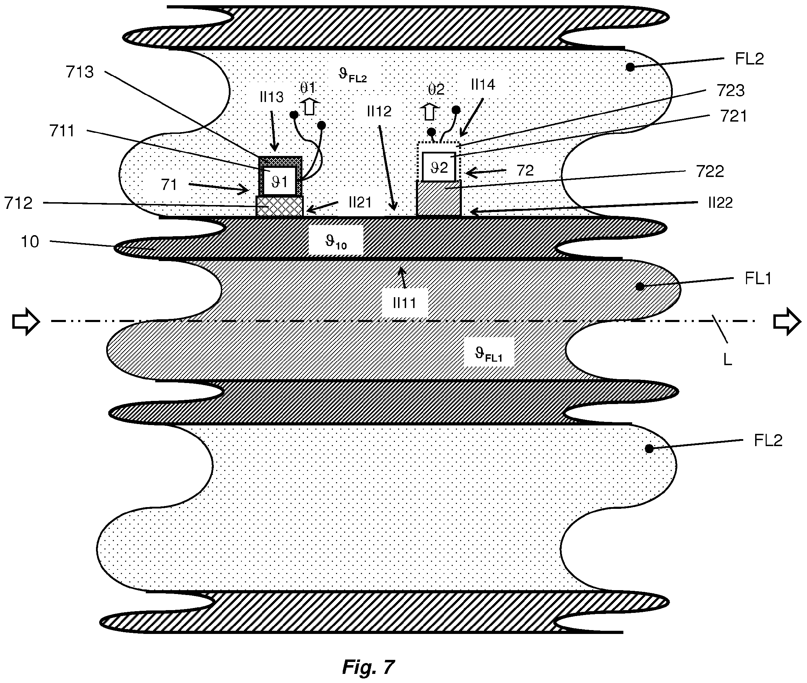

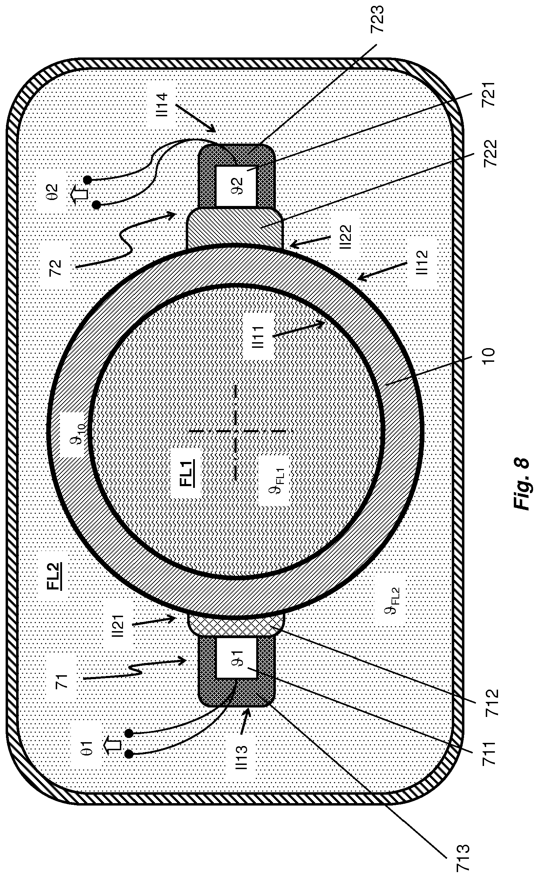

Um auch den Wärmewiderstand R3 zum einen auf möglichst einfache Weise vorab bestimmen zu können, zum anderen aber auch nämlichen Wärmewiderstand R3 so auszubilden, daß dessen jeweilige Exemplare innerhalb eines Loses bzw. einer Serie von industriell gefertigten Wandlervorrichtungen der in Rede stehenden Art von Wandlervorrichtung zu Wandlervorrichtung auch eine möglichst geringen Streuung aufweisen, mithin die Wandlervorrichtung ingesamt gut reproduzierbar ist, weist der erste Temperatursensor 71 gemäß einer weiteren Ausgestaltung der Erfindung - und wie auch in Fig. 7 bzw. 8 jeweils schematisch dargestellt - ferner einen dessen Temperaturfühler 711 thermisch mit dem im Zwischenraum gebildeten Fluidvolumen koppelnden dritten Kopplungskörper 713 auf, der nämliches Fluidvolumen unter Bildung der dritten Grenzfläche II13 erster Art kontaktiert. Der Kopplungskörper 713 besteht gemäß weitere Ausgestaltungen der Erfindung zumindest anteilig, insb. nämlich überwiegend oder gänzlich, aus einem Material, von dem eine spezifische Wärmeleitfähigkeit $\lambda 723$ größer als die spezifische Wärmeleitfähigkeit $\lambda F$ des im Zwischenraum gehaltenen Fluids FL2 und/oder größer als 0,1 W / (m · K) ist, und von dem eine spezifische Wärmekapazität cp713 kleiner als eine spezifische Wärmekapazität cpF des im Zwischenraum gehaltenen Fluids FL2 und/oder kleiner als 2000 J / (kg · K), ist. In vorteilhafter Weise ist das Material des Kopplungskörper 713 abgestimmt auf das im Zwischenraum vorgehalten Fluid FL2 so gewählt, daß ein Verhältnis $\lambda 723 / \lambda F$ der spezifische Wärmeleitfähigkeit $\lambda 723$ nämlichen Materials zur Wärmeleitfähigkeit $\lambda P$ des im Zwischenraum gehaltenen Fluids FL2 größer als 0,2 ist, und/oder daß ein Verhältnis cp723 / cpF der spezifische Wärmekapazität cp723 nämlichen Materials zur Wärmekapazität cpF des im Zwischenraum gehaltenen Fluids FL2 kleiner als 1,5 ist. Der Kopplungskörper 713 kann-beispielsweise auch gänzlich - mittels eines auf dem Temperaturfühler 711 des Temperatursensors 71 applizierten, beispielsweise auch mit Metalloxid-Partikeln versetzten, Kunststoffs, wie z.B. einem Epoxidharz oder einem Silikon, gebildet sein. Alternativ oder in Ergänzung kann nämlicher Kopplungskörper 713, ggf. auch gänzlich, mittels eines auf dem Temperaturfühler 711 applizierten Gewebeband, beispielsweise einem Glasfasergewebeband, bzw. auch mittels eines auf dem Temperaturfühler 711 applizierten Metallblech, wie z.B. einem Blechstreifen aus Edelstahl, gebildet sein.

Nach einer weiteren Ausgestaltung ist darüberhinaus auch der Temperatursensor 72 - wie auch in Fig. 7 bzw. 8 jeweils schematisch dargestellt - mittels eines weiteren, nämlich einem dessen Temperaturfühler 721 thermisch mit dem im Zwischenraum gebildeten Fluidvolumen koppelnden vierten Kopplungskörper 723 gebildet, der das im Zwischenraum gebildete Fluidvolumen unter Bildung der vierten Grenzfläche II14 erster Art kontaktiert. Der Kopplungskörper 723 kann in vorteilhafter Weise zudem baugleich zum Kopplungskörper 713 des Temperatursensors 71 ausgebildet sein. Demnach kann auch der vierte Kopplungskörper 723 zumindest anteilig - beispielsweise nämlich überwiegend oder gänzlich - aus einem Material hergestellt sein, von dem eine spezifische Wärmeleitfähigkeit $\lambda 723$ größer als die spezifische Wärmeleitfähigkeit $\lambda F$ und/oder größer als 0,1 W / (m · K) ist, und von dem eine spezifische Wärmekapazität cp723 kleiner als die spezifische Wärmekapazität cpF und/oder kleiner als 2000 J / (kg · K), ist, beispielsweise auch derart, daß ein Verhältnis $\lambda 723 / \lambda F$ der spezifische Wärmeleitfähigkeit $\lambda 723$ zur Wärmeleitfähigkeit $\lambda F$ größer als 0,2 und/oder ein Verhältnis cp723 / cpF der spezifische Wärmekapazität cp723 zur Wärmekapazität cpF kleiner als 1,5 ist. Auch zur Herstellung des Kopplungskörper 723 kann beispielsweise ein auf dem Temperaturfühler 721 applizierter, ggf. auch zur Herstellung des Kopplungskörpers 713 dienlicher Kunststoff dienen, bzw. kann der Kopplungskörper 723 auch mittels eines auf dem Temperaturfühler 721 applizierten Abschnitts eines, ggf. auch zur Herstellung des Kopplungskörpers 713 dienlichen Gewebebands bzw. Metallblechs gebildet sein.

Um zum einen den Temperatursensor 71 mit möglichst geringer thermischer Trägheit bezüglich zeitlicher Änderungen der Rohrtemperatur bereitzustellen, zum anderen auch aber auch eine möglichst gute thermische Ankopplung des Temperatursensors 71 an die Wandung des Rohrs auch bei möglichst kompakter Bauweise zu erreichen ist der Kopplungskörper 712 gemäß einer weiteren Ausgestaltung der Erfindung zumindest anteilig - beispielsweise auch überwiegend oder gänzlich - aus einem Material, beispielsweise nämlich einem Wärmeleitkleber hergestellt, von dem eine spezifische Wärmeleitfähigkeit $\lambda 712$ größer als eine spezifische Wärmeleitfähigkeit $\lambda F$ des im Zwischenraum gehaltenen Fluids FL2 und/oder größer als 1 W / (m · K) ist. In vorteilhafter Weise ist das Material des Kopplungskörpers 712 hierbei ferner so gewählt, daß ein Verhältnis $\lambda 712 / \lambda F$ der spezifische Wärmeleitfähigkeit $\lambda 712$ nämlichen Materials des Kopplungskörpers 712 zur spezifischen Wärmeleitfähigkeit $\lambda F$ des im Zwischenraum gehaltenen Fluids FL2 größer als 2 ist, und/oder daß ein Verhältnis cp712 / cpF einer spezifische Wärmekapazität cp712 nämlichen Materials des Kopplungskörpers 712 zur Wärmekapazität cpF des im Zwischenraum gehaltenen Fluids FL2 kleiner als 1,5 ist, insb. derart, daß die spezifische Wärmekapazität cp712 kleiner als eine spezifische Wärmekapazität cpF des im Zwischenraum vorgehaltenen Fluids ist. Darüberhinaus kann auch der Kopplungskörper 722 des Temperatursensors 72 zumindest teilweise (oder auch gänzlich) aus dem gleichen Material wie der Kopplungskörper 712 des Temperatursensors 71 hergestellt sein.

Aufgrund der thermischen Ankopplung der beiden Temperatursensoren 71, 72 an die Wandung des Rohrs einerseits bzw. das dieses um gebende Fluidvolumen andererseits - mit oder ohne Kopplungskörper 713 bzw. 714 - wird jede der Meßstellentemperaturen $\vartheta 1$, $\vartheta 2$ jeweils zum einen durch eine zwischen der Rohrtemperatur $\vartheta_{10}$ und der Rohrumgebungstemperatur $\vartheta_{FL2}$ existierende Temperaturdifferenz $\Delta T'$ ($\Delta T' = \vartheta_{10} - \vartheta_{FL2}$) bzw. eine zwischen der Meßfluidtemperatur $\vartheta_{FL1}$ und der Rohrumgebungstemperatur $\vartheta_{FL2}$ existierende Temperaturdifferenz $\Delta T''$ ($\Delta T'' = \vartheta_{FL1} - \vartheta_{FL2}$) und zum anderen aber auch jeweils durch die tatsächlichen Werte der vorbezeichneten Wärmewiderstände R1, R2, R3 und R4 bzw. daraus resultierenden Widerstandsverhältnisse bestimmt. Unter der für das dem in Fig. 6 dargestellten Ersatzschaltbild zugrunde liegenden Berechnungsmodell getroffenen Annahme, daß der durch den Wärmewiderstand R3 hindurchgehende Wärmestrom Q3 dem durch den Wärmewiderstand R1 hindurchgehenden Wärmestrom Q1 bzw. der durch den Wärmewiderstand R4 hindurchgehende Wärmestrom Q4 dem durch den Wärmewiderstand R2 hindurchgehenden Wärmestrom Q2 entsprechen, mithin gilt Q3 = Q1 bzw. Q4 = Q2, kann zunächst abgeleitet werden, daß die Meßstellentemperatur $\vartheta 1$ bzw. die Meßstellentemperatur $\vartheta 2$ näherungsweise bzw. bei im wesentlichen stationärer Temperaturverteilung innerhalb der Wandlervorrichtung u.a. eine der Bedingungen:

$$\vartheta 1 = \left(\vartheta_{FL2} - \vartheta_{10}\right) \cdot \frac{R1}{R1+R3} + \vartheta_{10} \sim -\left(\vartheta_{FL1} - \vartheta_{FL2}\right) \cdot \frac{R1}{R1+R3} + \vartheta_{10} \tag{1}$$

$$\vartheta 2 = \left(\vartheta_{FL2} - \vartheta_{10}\right) \cdot \frac{R2}{R2+R4} + \vartheta_{10} \sim -\left(\vartheta_{FL1} - \vartheta_{FL2}\right) \cdot \frac{R2}{R2+R4} + \vartheta_{10} \tag{2}$$

$$\vartheta 1 = \left(\vartheta_{10} - \vartheta_{FL2}\right) \cdot \frac{R3}{R1+R3} + \vartheta_{FL2} \sim \left(\vartheta_{FL1} - \vartheta_{FL2}\right) \cdot \frac{R3}{R1+R3} + \vartheta_{FL2} \tag{3}$$

$$\vartheta 2 = \left(\vartheta_{10} - \vartheta_{FL2}\right) \cdot \frac{R4}{R2+R4} + \vartheta_{FL2} \sim \left(\vartheta_{FL1} - \vartheta_{FL2}\right) \cdot \frac{R4}{R2+R4} + \vartheta_{FL2} \tag{4}$$

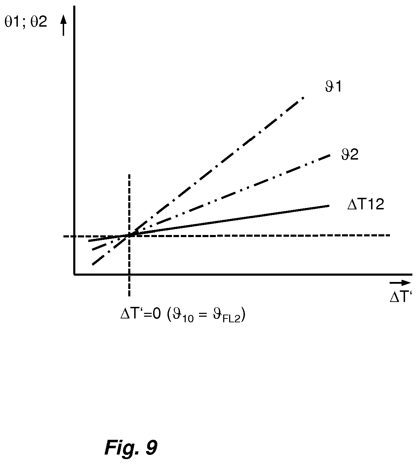

erfüllen, bzw. daß die Meßstellentemperaturen $\vartheta 1$, $\vartheta 2$ gemäß nämlicher Bedingungen von der Rohrumgebungstemperatur $\vartheta_{FL2}$ sowie der Meßfluidtemperatur $\vartheta_{FL1}$ bzw. der Rohrtemperatur $\vartheta_{10}$ abhängig sind. Ferner ergibt sich zudem, daß auch eine einer Differenz der beiden durch die Temperaturmeßsignale $\theta 1$, $\theta 2$ repräsentierten Meßstellentemperaturen $\vartheta 1$, $\vartheta 2$ entsprechende Meßstellentemperatur-Differenz $\Delta T12 = \vartheta 1 - \vartheta 2$ der vorbezeichneten Temperaturdifferenz $\Delta T'$ zwischen der Rohrtemperatur $\vartheta_{10}$ und der Rohrumgebungstemperatur $\vartheta_{FL2}$ gemäß folgender - in Fig. 9 nochmals grafisch veranschaulichter - Beziehung:

$$\vartheta 1 - \vartheta 2 = \left(\vartheta_{10} - \vartheta_{FL2}\right) \cdot \left(\frac{R1}{R1+R3} - \frac{R2}{R2+R4}\right) \tag{5}$$

zumindest näherungsweise proportional ist, bzw. daß umgekehrt die Rohrtemperatur $\vartheta_{10}$ gemäß der Beziehung:

$$\vartheta_{10} = \frac{1+\dfrac{R3}{R1}}{\dfrac{R3}{R1}-\dfrac{R4}{R2}} \cdot \vartheta 1 - \frac{1+\dfrac{R4}{R2}}{\dfrac{R3}{R1}-\dfrac{R4}{R2}} \cdot \vartheta 2 \tag{6}$$

durch die beiden Meßstellentemperaturen $\vartheta 1$, $\vartheta 2$ bestimmbar ist. In Kenntnis der die Wärmewiderstände R1, R2, R3, R4 bzw. der entsprechenden Wärmewiderstandsverhältnisse R1/R3, R4/R2 können somit z.B. die Temperaturdifferenz $\Delta T'$ bzw. auch die Rohrtemperatur $\vartheta_{10}$ unmittelbar anhand der beiden Meßstellentemperaturen $\vartheta 1$, $\vartheta 2$ bzw. deren Meßstellentemperatur-Differenz $\Delta T12$ berechnet werden.

Jeder der vorbezeichneten Wärmewiderstände R1, R2, R3 und R4 ist - wie bereits erwähnt - jeweils maßgeblich bzw. gänzlich durch Materialkennwerte, wie z.B. eine spezifische Wärmeleitfähigkeit $\lambda$, sowie Abmessungen des jeweiligen Kopplungskörpers bzw. der Wandung des Rohrs, wie z.B. eine für den jeweils hindurchfließend Wärmestrom

jeweilige effektive Länge $L_{th}$ des jeweiligen Kopplungskörpers sowie einen Flächeninhalt $A_{th}$ einer für nämlichen Wärmestrom jeweilige effektive Querschnittsfläche des jeweiligen Kopplungskörpers, beispielsweise nämlich der Flächeninhalt der jeweiligen Grenzflächen 1121, II22, und/oder durch entsprechende Materialkennwerte der Wandung des Rohrs 10 bzw. des im Zwischenraum 100' vorgehaltenen Fluids FL2, mithin schon allein durch vorab zumindest näherungsweise bekannte, gleichwohl über einen längeren Betriebszeitraum im wesentlichen unveränderliche Parameter definiert. Somit kann jeder der Wärmewiderstände R1, R2, R3, R4 mittels nämlicher Parameter ($\lambda$, $A_{th}$, $L_{th}$) vorab ausreichend genau bestimmt. werden, beispielsweise durch experimentelle Messungen und/oder durch Berechnungen. Beispielsweise kann nämlich basierend auf der bekannten Beziehung:

$$Rth = \frac{L_{eff}}{\lambda \cdot A_{eff}} \tag{7}$$

ein den Wärmewiderstand R1 bzw. R2 mitbestimmender - nämlich einen auf einen Wärmestrom aufgrund von Wärmeleitungsvorgängen bezogenen Temperaturabfall repräsentierender - Wärmeleitwiderstand quantifiziert werden, beispielsweise nämlich für eine Einheit K/W (Kelvin pro Watt) berechnet werden. In Kenntnis der Materialkennwerte der zur Herstellung der Temperatursensoren jeweils tatsächlich verwendeten Materialen sowie der tatsächlichen Form und Abmessung der vorbezeichneten, mittels der Temperatursensoren gebildeten Grenzflächen II13, II14, II21, II22 können auch die Widerstandswerte für die vorbezeichneten, die Wärmewiderstande R1, R2, R3, R4 jeweils mitbestimmenden Wärmeübergangswiderstände ausreichend genau festgelegt bzw. ausreichend genau vorab ermittelt werden. Alternativ oder in Ergänzung können die Wärmewiderstande R1, R2, R3, R4 bzw. der entsprechenden Wärmewiderstandsverhältnisse R1/R3, R4/R2 beispielsweise auch mittels an der jeweiligen Wandlervorrichtung durchgeführten Kalibriermessungen experimentell ermittelt werden.

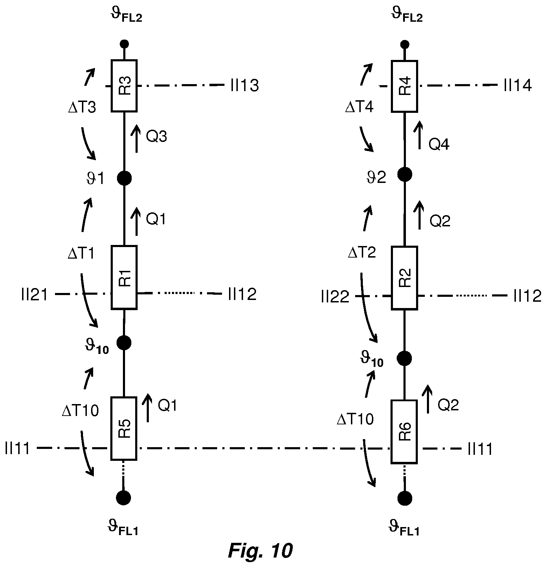

Unter weiterer Berücksichtigung auch von durch die Wandung des Rohrs 10 gestellten, eine Temperaturdifferenz $\Delta T10$ zwischen der Grenzfläche II11 erster Art und der Grenzfläche II12 erster Art provozierenden weiteren Wärmewiderständen, nämlich - wie auch in Fig. 10 anhand eines im Vergleich zu dem in Fig. 6 entsprechend ergänzten Ersatzschaltbild veranschaulicht - eines dem auch innerhalb der Wandung des Rohrs zwischen der Grenzfläche II11 erster Art und der Grenzfläche II12 erster Art fließenden Wärmestrom Q1 entgegenwirkenden fünften Wärmewiderstands R5 (R5 = $\Delta T10$ / Q1) sowie eines dem auch innerhalb der Wandung des Rohrs zwischen der Grenzfläche II11 erster Art und der Grenzfläche II12 erster Art fließenden Wärmestrom Q2 entgegenwirkenden sechsten Wärmewiderstand R6 (R6 = $\Delta T10$ / Q2) kann zudem auch eine Abhängigkeit der Meßstellentemperatur-Differenz $\Delta T12$ von der zwischen der Meßfluidtemperatur $\vartheta_{FL1}$ und der Rohrumgebungstemperatur $\vartheta_{FL2}$ existierende Temperaturdifferenz $\Delta T''$ ($\Delta T'' = \vartheta_{FL1} - \vartheta_{FL2}$) bzw. umgekehrt auch eine Abhängigkeit der Meßstellentemperatur-Differenz $\Delta T12$ von der zwischen der Meßfluidtemperatur $\vartheta_{FL1}$ und der Rohrumgebungstemperatur $\vartheta_{FL2}$ existierende Temperaturdifferenz $\Delta T''$ ($\Delta T'' = \vartheta_{FL1} - \vartheta_{FL2}$) formuliert bzw. jeweils in Form einer entsprechenden Berechnungsvorschrift ausgeführt werden:

$$\vartheta 1 - \vartheta 2 = \left(\vartheta_{FL1} - \vartheta_{FL2}\right) \cdot \left(\frac{R3}{R1+R3+R5} - \frac{R4}{R2+R4+R6}\right) \tag{8}$$

bzw.

$$\vartheta_{FL1} = \frac{1+\dfrac{R3}{R1+R5}}{\dfrac{R3}{R1+R5} - \dfrac{R4}{R2+R6}} \cdot \vartheta 1 - \frac{1+\dfrac{R4}{R2+R6}}{\dfrac{R3}{R1+R5} - \dfrac{R4}{R2+R6}} \cdot \vartheta 2 \tag{9}.$$

Auch die vorbezeichneten, durch die Wandung des Rohrs gestellten Wärmewiderstände R5 bzw. R6 können grundsätzlich vorab ausreichend genau quantifiziert, nämlich basierend auf Materialkennwerten des Rohrs, wie etwa dessen spezifischer Wärmeleitfähigkeit $\lambda 10$ bzw. spezifischer Wärmekapazität cp10, sowie dessen Abmessungen, insb. dessen Wanddicke s, berechnet werden, beispielsweise gemäß einer der in Abwandlung der vorbezeichneten Beziehung (7) entsprechend dem in Fig. 10 gezeigten Ersatzschaltbild formulierten Berechnungsvorschriften:

$$R5 = \frac{\Delta T10}{Q1} \approx \frac{L_{eff}}{\lambda 10 \cdot A_{eff}} \tag{10}$$

$$R6 = \frac{\Delta T10}{Q2} \approx \frac{L_{eff}}{\lambda 10 \cdot A_{eff}} \tag{11}.$$

Untersuchungen haben hierbei ferner gezeigt, daß bei Ansetzung der Wanddicke s als effektive Länge $L_{eff}$ (s → $L_{eff}$) ein dann basierend auf einem Doppelten des Flächeninhalts der jeweils zugehörigen Grenzfläche II21 bzw. II22, mithin basierend auf einem Doppelten des Flächeninhalts $A_{th}$ ($2 \cdot A_{th}$ → $A_{eff}$) der für den jeweiligen Wärmestrom Q1, Q2 jeweiligen effektiven Querschnittsfläche des jeweils zugehörigen Kopplungskörpers 712, 722, ermittelter Widerstandswert eine sehr genaue Schätzung für den Wärmeleitungsanteil des für den Wärmestrom Q1 wirksamen Wärmewiderstands R5 bzw. des für den Wärmestrom Q2 wirksamen Wärmewiderstands R6, mithin insgesamt eine gute Näherung für den jeweiligen Wärmewiderstand R5 bzw. R6 ist.

Nachdem grundsätzlich jeder der vorbezeichneten Wärmewiderstände R1, R2, R3, R4, R5, R6 bzw. jedes der daraus abgeleiteten Widerstandsverhältnisse vorab bestimmbar, nämlich quantifizierbar ist, kann anhand der mittels der Temperatursensoren 71, 72 erfaßten Meßstellentemperaturen $\vartheta 1$, $\vartheta 2$ bzw. der diese jeweils repräsentierenden Temperaturmeßsignale $\theta 1$, $\theta 2$ dementsprechend auch die Rohrtemperatur $\vartheta_{10}$ - beispielsweise nämlich in Anwendung der Beziehung (6) - und/oder die Meßfluidtemperatur $\vartheta_{FL1}$ - beispielsweise nämlich in Anwendung der Beziehung 9 - berechnet bzw. gemessen werden.

Die Meß- und Betriebs-Elektronik ME daher ist nach einer weiteren Ausgestaltung der Erfindung ferner auch dafür eingerichtet, unter Verwendung sowohl des ersten Temperaturmeßsignals $\theta 1$ als auch des zweiten Temperaturmeßsignals $\theta 2$ wenigstens einen Ziel-Temperatur-Meßwert $X_\Theta$, nämlich einen die jeweilige Ziel-Temperatur, beispielsweise nämlich die Rohrtemperatur oder die Meßfluidtemperatur, repräsentierenden Meßwert zu generieren; dies beispielsweise derart, daß die Meß- und Betriebs-Elektronik ME zunächst basierend auf dem Temperaturmeßsignal $\theta 1$ einen die Meßstellentemperatur $\vartheta 1$ repräsentierenden ersten Meßstellentemperatur-Meßwert $X_1$ und basierend auf dem Temperaturmeßsignal $\theta 2$ einen die Meßstellentemperatur $\vartheta 2$ repräsentierenden zweiten Meßstellentemperatur-Meßwert $X_2$ ermittelt und hernach den Ziel-Temperatur-Meßwert $X_\Theta$ unter Verwendung sowohl des Meßstellentemperatur-Meßwerts $X_1$ als auch des Meßstellentemperatur-Meßwerts $X_2$ berechnet. Die Berechnung des Ziel-Temperatur-Meßwerts $X_\Theta$ kann z.B. in der Weise erfolgen, daß nämlicher Ziel-Temperatur-Meßwert gemäß einer von den Meßstellentemperatur-Meßwerten $X_1$, $X_2$ sowie von vorab ermittelten und in der Meß- und Betriebs-Elektronik ME abgespeicherten numerischen Festwerten $\alpha$, $\beta$ abhängigen Berechnungsvorschrift ermittelt wird bzw. eine entsprechende Bedingung:

$$X_\Theta = \alpha \cdot X_{\theta 1} + \beta \cdot X_{\theta 2} \tag{12}$$

erfüllt, mithin eine Temperatur an einem durch die Größe der Festwerte $\alpha$, $\beta$ bzw. ein daraus abgeleitetes Größenverhältnis $\alpha/\beta$ festgelegten Vorrichtungsreferenzpunkt (poi) repräsentiert. Bei Verwendung von lediglich zwei basierend auf den Temperaturmeßsignalen ermittelten Meßstellentemperatur-Meßwerten sind die in vorbezeichneter Bedingung enthaltenen Festwerte $\alpha$, $\beta$ in vorteilhafter Weise so gewählt, daß sie im Ergebnis die Bedingung $\alpha + \beta = 1$ erfüllen. Die Festwerte $\alpha$, $\beta$ können hierbei so definiert sein, daß der dadurch schlußendlich festgelegte Vorrichtungsreferenzpunkt sowohl vom ersten Temperatursensor 71 als auch vom zweiten Temperatursensor 72 entfernt ist, insb. nämlich innerhalb des Rohrs verortet ist; dies beispielsweise auch so, daß die durch den Ziel-Temperatur-Meßwert repräsentierte Ziel-Temperatur der Meßfluidtemperatur $\vartheta_{FL1}$ oder auch der Rohrtemperatur $\vartheta_{10}$ entspricht. Die Rohrtemperatur $\vartheta_{10}$ ist nicht zuletzt für den vorbeschriebenen Fall, daß die Wandlervorrichtung MW als Meßwandler vom Vibrationstyp ausgebildet ist, von besonderem Interesse, nachdem u.a. ein Elastizitätsmodul des jeweiligen Materials der Wandung des Rohrs wie auch räumliche Abmessungen des Rohrs, mithin die dadurch definierten Schwingungseigenschaften des jeweiligen Rohrs nennenswert auch von der Rohrtemperatur $\vartheta_{10}$ abhängig sind. Beispielsweise kann - nämlich in Anwendung von Gl. (6) - der Vorrichtungsbezugspunkt auf der Grenzfläche II21 zweiter Art, mithin (virtuell) auf bzw. in der Wandung des Rohrs 10 positioniert sein, bzw. kann die Meß- und Betriebs-Elektronik ME entsprechend dafür eingerichtet sein, den Ziel-Temperatur-Meßwert $X_\Theta$ als Meßwert für die Rohrtemperatur $\vartheta_{10}$ zu ermitteln bzw. auszugeben, indem die Festwerte $\alpha$, $\beta$ so gewählt sind, daß dadurch die Bedingung:

$$\alpha = \frac{1 + \dfrac{R3}{R1}}{\dfrac{R3}{R1} - \dfrac{R4}{R2}} \tag{13}$$

sowie die Bedingung:

$$\beta = -\frac{1+\dfrac{R4}{R2}}{\dfrac{R3}{R1}-\dfrac{R4}{R2}} \qquad (14)$$

und/oder die Bedingung:

$$\beta = 1 - \alpha \qquad (15)$$

erfüllt sind. Alternativ oder in Ergänzung kann - nämlich in Anwendung von Gl. (9) - der Vorrichtungsbezugspunkt aber auch auf der Grenzfläche II11 erster Art, mithin (virtuell) innerhalb des Lumens 10' des Rohrs 10 bzw. des darin geführten Fluids FL1 positioniert sein, bzw. kann die die Meß- und Betriebs-Elektronik ME entsprechend dafür eingerichtet sein, den Ziel-Temperatur-Meßwert $X_\Theta$ als Meßwert für die Meßfluidtemperatur $\vartheta_{FL1}$ repräsentieren soll, zu ermitteln bzw. auszugeben. Dies kann unter Berücksichtigung auch der von der Wandung des Rohrs gestellten Wärmewiderstände R5 und R6 in einfacher Weise dadurch realisiert sein, indem die Festwerte $\alpha$, $\beta$ so gewählt sind, daß dadurch die Bedingung:

$$\alpha = \frac{1+\dfrac{R3}{R1+R5}}{\dfrac{R3}{R1+R5}-\dfrac{R4}{R2+R6}} \qquad (16)$$

sowie die Bedingung:

$$\beta = -\frac{1+\dfrac{R4}{R2+R6}}{\dfrac{R3}{R1+R5}-\dfrac{R4}{R2+R6}} \qquad (17)$$

erfüllt sind.

Aus der Zusammenschau des in Fig. 6 dargestelltem Ersatzschaltbild und der Beziehung (5) bzw. (6) ergibt sich ferner, daß - um die Rohrtemperatur $\vartheta_{10}$ in Abhängigkeit der Temperaturdifferenzen $\Delta T1$, $\Delta T2$ bzw. der Meßstellentemperaturen $\vartheta 1$, $\vartheta 2$ tatsächlich erklären zu können - die Wärmewiderstände R1, R2, R3 und R4 grundsätzlich so zu bemessen sind, daß die dadurch provozierten Temperaturdifferenzen $\Delta T1$, $\Delta T2$ bzw. Meßstellentemperaturen $\vartheta 1$, $\vartheta 2$ voneinander abweichen, mithin die davon abgeleitete Meßstellentemperatur-Differenz $\Delta T12$ im Ergebnis nennenswert von Null verschieden ist bzw. für die Temperaturdifferenzen $\Delta T1$, $\Delta T2$:

$$\frac{\Delta T1}{\Delta T2} = \frac{\vartheta 1 - \vartheta_{10}}{\vartheta 2 - \vartheta_{10}} = \frac{R1}{R1+R3}\cdot\frac{R2+R4}{R2} = \frac{1+\dfrac{R4}{R2}}{1+\dfrac{R3}{R1}} \overset{!}{\neq} 1$$

gilt bzw. gelten muß. Dem Rechnung tragend und in Anwendung der vorbezeichneten Bedingungen (1) und (2) sind bei der erfindungsgemäßen Wandlervorrichtung die Wärmewiderstände R1, R2, R3, R4 daher ferner so bemessen, daß sie insgesamt eine Bedingung:

$$\frac{1 + \dfrac{R4}{R2}}{1 + \dfrac{R3}{R1}} < 1 \tag{18}$$

erfüllen. Um hierbei auch allfällige Meßungenauigkeiten der Temperaturfühler beider Temperatursensoren bzw. durch Fertigungstoleranzen bedingte Meßunsicherheiten bzw. Konfidenzintervalle ausgleichen zu können, etwa, derart, daß das eine ein positives Vorzeichen aufweisende Temperaturdifferenz $\Delta T'$ stets durch eine gleichermaßen positive momentane Meßstellentemperatur-Differenz $\Delta T12$ repräsentiert ist, sind die vorbezeichneten Wärmewiderstände R1, R2, R3, R4 nach einer weiteren Ausgestaltung ferner so bemessen, daß im Ergebnis auch die Bedingung:

$$\frac{1 + \dfrac{R4}{R2}}{1 + \dfrac{R3}{R1}} < 0{,}9 \tag{19}$$

erfüllt ist. Um zudem auch sicherstellen zu können, daß die der mit Gleichung (5) formulierten Beziehung zugrundeliegende Annahme, daß jede der beiden Meßstellentemperaturen $\vartheta1$, $\vartheta2$ jeweils gleichermaßen von der Temperaturdifferenz $\Delta T'$ abhängig ist, tatsächlich zutrifft, mithin im Betrieb der Wandlervorrichtung für die Temperaturdifferenzen $\Delta T1$, $\Delta T2$, $\Delta T3$, $\Delta T4$ möglichst genau gilt:

$$\Delta T1 + \Delta T3 = \Delta T2 + \Delta T4 = \Delta T' \tag{20}$$

sind die Wärmewiderstände R1, R2, R3, R4 bei der erfindungsgemäßen Wandlervorrichtung ferner auch so bemessen, daß sie insgesamt zudem auch eine Bedingung:

$$\frac{1 + \dfrac{R4}{R2}}{1 + \dfrac{R3}{R1}} > 0{,}005 \tag{21},$$

insb. nämlich auch eine Bedingung:

$$\frac{1 + \dfrac{R4}{R2}}{1 + \dfrac{R3}{R1}} > 0{,}01 \tag{22}$$

erfüllen. Dem folge leistend kann bei Verwendung von typischen bzw. auch den vorbezeichneten Materialien zur Herstellung der Temperatursensoren bzw. bei Ausführung der Temperatursensoren in dafür typischen Bauformen zumeist ohne weiteres erreicht werden, daß ein räumlicher Abstand zwischen den beiden Temperatursensoren 71, 72, nicht zuletzt auch den damit jeweils gebildeten Grenzflächen 1113, II14 erster Art klein genug ausgebildet ist, damit nämliche Grenzflächen im Betrieb der Wandlervorrichtung innerhalb einer keine oder allenfalls vernachlässigbare Temperaturgradienten aufweisenden Zone des Fluidvolumens positioniert sind, mithin im wesentlichen mit der gleichen Umgebungstemperatur beaufschlagt sind.

Für den sehr einfach zu realisierenden Fall, daß die beiden Wärmwiderstände R3, R4 gleich ausgebildet sind, mithin die Bedingung:

$$R3 = R4 \qquad\qquad (23)$$

erfüllen, können die mit den Bedingungen (18) bzw. (21) formulierten Bemessungsvorschriften auf sehr einfache, gleichwohl effektive Weise durch eine entsprechende Dimensionierung allein der Wärmwiderstände R1, R2 erfüllt, mithin kann - baugleiche Temperaturfühler 711, 721 vorausgesetzt- nämlichen Bedingungen (18) bzw. (21) schon allein durch eine entsprechend angepaßte Ausgestaltung der beiden Kopplungskörper 712, 722 Folge geleistet werden.

**Patentansprüche**

1. Wandlervorrichtung, umfassend:

   - ein eine von einer, insb. metallischen, Wandung umhüllte Kavität aufweisendes Wandler-Gehäuse (100);
   - ein ein von einer, insb. metallischen, Wandung umhülltes Lumen (10') aufweisendes Rohr (10),

     -- das innerhalb der Kavität des Wandler-Gehäuses angeordnet ist, derart, daß zwischen einer der Kavität zugewandte Innenfläche (100+) der Wandung des Wandler-Gehäuses und einer der Kavität zugewandten Mantelfläche (10#) der Wandung des Rohrs ein Zwischenraum (100') gebildet ist, und
     -- das dafür eingerichtet ist, in dessen Lumen ein, insb. zumindest zeitweise strömendes, Fluid (FL1), insb. ein Gas, eine Flüssigkeit oder eine fließfähige Dispersion, zu führen, derart, daß eine nämlichem Lumen zugewandte Innenfläche (10+) der Wandung des Rohrs von im Lumen geführtem Fluid unter Bildung einer ersten Grenzfläche (II11) erster Art, nämlich einer Grenzfläche zwischen einer fluiden und einer festen Phase, kontaktiert ist;

   - einen mittels eines innerhalb des Zwischenraums (100') angeordneten, insb. mittels eines Platin-Meßwiderstandes, eines Thermistors oder eines Thermoelements gebildeten, ersten Temperaturfühlers (711) sowie mittels eines nämlichen ersten Temperaturfühler (711) thermisch leitend mit der Wandung des Rohrs koppelnden ersten Kopplungskörpers (712) gebildeten ersten Temperatursensor (71), der dafür eingerichtet ist, eine erste Meßstellentemperatur ($\vartheta$1), nämlich eine Temperatur an einer mittels des ersten Temperaturfühlers gebildeten ersten Temperaturmeßstelle, zu erfassen und in ein erstes Temperaturmeßsignal ($\theta$1), nämlich ein die erste Meßstellentemperatur ($\vartheta$1) repräsentierendes erstes elektrisches Meßsignal, insb. mit einer von nämlicher ersten Meßstellentemperatur abhängigen elektrische Signalspannung und/oder einem von nämlicher ersten Meßstellentemperatur abhängigen elektrischen Signalstrom, zu wandeln;
   - sowie einen mittels eines vom ersten Temperaturfühler (711) beabstandet innerhalb des Zwischenraums angeordneten, insb. mittels eines Platin-Meßwiderstandes, eines Thermistors oder eines Thermoelements gebildeten, zweiten Temperaturfühlers (721) sowie mittels eines nämlichen zweiten Temperaturfühler thermisch leitend mit der Wandung des Rohrs koppelnden zweiten Kopplungskörpers (722) gebildeten zweiten Temperatursensor (72), der dafür eingerichtet ist, eine zweite Meßstellentemperatur ($\vartheta$2), nämlich eine Temperatur an einer mittels des zweiten Temperaturfühlers gebildeten zweiten Temperaturmeßstelle, zu erfassen und in ein zweites Temperaturmeßsignal, nämlich ein die zweite Meßstellentemperatur ($\vartheta$2) repräsentierendes zweites elektrisches Meßsignal ($\theta$2), insb. mit einer von nämlicher zweiten Meßstellentemperatur abhängigen elektrische Signalspannung und/oder einem von nämlicher zweiten Meßstellentemperatur abhängigen elektrischen Signalstrom, zu wandeln;
   - wobei das Wandler-Gehäuse und das Rohr dafür eingerichtet sind, im Zwischenraum (100') ein, insb. eine spezifische Wärmeleitfähigkeit von weniger als 1 W / (m · K) aufweisendes, Fluid (FL2), insb. Luft oder ein inertes Gas, unter Bildung eines das Rohr umhüllenden Fluidvolumens zu halten, derart, daß die dem Zwischenraum zugewandte Mantelfläche (10+) der Wandung des Rohrs (10) unter Bildung einer zweiten Grenzfläche (II12) erster Art von im Zwischenraum (100') gehaltenem Fluid (FL2) kontaktiert ist;
   - wobei der erste Temperatursensor (71) mittels des ersten Kopplungskörpers die Mantelfläche (10#) der Wandung des Rohrs unter Bildung einer ersten Grenzfläche (II21) zweiter Art, nämlich einer Grenzfläche zwischen zwei festen Phasen, und der zweite Temperatursensor (72) mittels des zweiten Kopplungskörpers die Mantelfläche (10#) der Wandung des Rohrs unter Bildung einer zweiten Grenzfläche (II22) zweiter Art kontaktieren, derart, daß

     -- einem aus einer zwischen der ersten Grenzfläche (II21) zweiter Art und der ersten Temperaturmeßstelle herrschenden Temperaturdifferenz, $\Delta$T1, resultierenden, durch nämliche Grenzfläche (II21) insgesamt hindurchtretenden und weiter zur ersten Temperaturmeßstelle fließenden Wärmestrom, Q1, ein erster Wärmewiderstand, R1,
- und einem aus einer zwischen der zweiten Grenzfläche (II22) zweiter Art und der zweiten Temperaturmeßstelle herrschenden Temperaturdifferenz, ΔT2, resultierenden, durch nämliche Grenzfläche (II22) insgesamt hindurchtretenden und weiter zur zweiten Temperaturmeßstelle fließenden Wärmestrom, Q2, ein zweiter Wärmewiderstand, R2, entgegenwirken;

- wobei das das Rohr umhüllende Fluidvolumen den ersten Temperatursensor (71) unter Bildung einer dritten Grenzfläche (II13) erster Art sowie den zweiten Temperatursensor (72) unter Bildung einer vierten Grenzfläche (II14) erster Art kontaktiert, derart, daß

-- einem aus einer zwischen der dritten Grenzfläche (II13) erster Art und der ersten Temperaturmeßstelle herrschenden Temperaturdifferenz, ΔT3, resultierenden, von der ersten Temperaturmeßstelle insgesamt zu nämlicher Grenzfläche (II13) fließenden, gleichwohl durch nämliche Grenzfläche (II13) insgesamt hindurchtretenden Wärmestrom, Q3, ein dritter Wärmewiderstand, R3,
-- und einem aus einer zwischen der vierten Grenzfläche (II14) erster Art und der zweiten Temperaturmeßstelle herrschenden Temperaturdifferenz, ΔT4, resultierenden, von der zweiten Temperaturmeßstelle insgesamt zu nämlicher Grenzfläche (II14) fließenden, gleichwohl durch nämliche Grenzfläche (II14) insgesamt hindurchtretenden Wärmestrom, Q4, ein vierter Wärmewiderstand, R4, entgegenwirken;

- und wobei der erste Wärmewiderstand, R1, der zweite Wärmewiderstand, R2, der dritte Wärmwiderstand, R3, sowie der vierte Wärmwiderstand, R4, so bemessen sind, daß insgesamt eine Bedingung

$$0{,}005 < \frac{1+\dfrac{R4}{R2}}{1+\dfrac{R3}{R1}} < 1$$

erfüllt ist.

2.  Wandlervorrichtung gemäß einem der vorherigen Ansprüche,

- wobei der erste Wärmewiderstand, R1, kleiner als 1000 K/W ist, und der zweite Wärmewiderstand, R2, kleiner als 1000 K/W sind; und/oder
- wobei der erste Wärmewiderstand, R1, kleiner als 30 K /W, insb. kleiner als 25 K / W, ist; und/oder
- wobei der dritte Wärmwiderstand, R3, und der vierte Wärmwiderstand, R4, eine Bedingung R3 = R4 erfüllen; und/oder
- wobei der erste Wärmewiderstand, R1, der zweite Wärmewiderstand, R2, der dritte Wärmwiderstand, R3, sowie der vierte Wärmwiderstand, R4, insgesamt eine Bedingung

$$\frac{1+\dfrac{R4}{R2}}{1+\dfrac{R3}{R1}} < 0{,}9$$

erfüllen; und/oder
- wobei der erste Wärmewiderstand, R1, der zweite Wärmewiderstand, R2, der dritte Wärmwiderstand, R3, sowie der vierte Wärmwiderstand, R4, insgesamt eine Bedingung

$$\frac{1+\dfrac{R4}{R2}}{1+\dfrac{R3}{R1}} > 0,01$$

erfüllen; und/oder

- wobei der dritte Wärmewiderstand, R3, größer als 500 K /W, insb. größer als 5000 K/W, und/oder kleiner als 20000 K/W, insb. kleiner als 10000 K/W, ist; und/oder

- wobei der vierte Wärmewiderstand, R4, größer als 500 K/W, insb, größer als 5000 K/W, und/oder kleiner als 20000 K / W, insb. kleiner als 10000 K / W, ist.

3. Wandlervorrichtung gemäß einem der vorherigen Ansprüche, wobei der erste Kopplungskörper (712) zumindest anteilig, insb. überwiegend oder gänzlich, aus einem Material, insb. einem Wärmeleitkleber, besteht, von dem eine spezifische Wärmeleitfähigkeit, $\lambda712$, größer als eine spezifische Wärmeleitfähigkeit, $\lambda F$, des im Zwischenraum gehaltenen Fluids (FL2) und/oder größer als 1 W / (m · K) ist, und von dem eine spezifische Wärmekapazität, cp712, kleiner als eine spezifische Wärmekapazität, cpF, des im Zwischenraum vorgehaltenen Fluids und/oder kleiner als 2000 J / (kg · K), ist, insb. derart, daß ein Verhältnis, $\lambda712$ / $\lambda F$, der spezifische Wärmeleitfähigkeit, $\lambda712$, nämlichen Materials zur spezifischen Wärmeleitfähigkeit, $\lambda F$, des im Zwischenraum vorgehaltenen Fluids größer als 2 ist, und/oder daß ein Verhältnis, cp712 / cpF, der spezifische Wärmekapazität, cp712, nämlichen Materials zur spezifischen Wärmekapazität, cpF, des im Zwischenraum gehaltenen Fluids (FL2) kleiner als 1,5 ist.

4. Wandlervorrichtung gemäß dem vorherigen Anspruch, wobei der zweite Kopplungskörper (722) zumindest anteilig, insb. überwiegend oder gänzlich, aus einem Material, insb. einem Metall, besteht, von welchem Material eine spezifische Wärmeleitfähigkeit, $\lambda722$, größer als die spezifische Wärmeleitfähigkeit, $\lambda712$, des Materials des ersten Kopplungskörpers (712) und/oder größer als 10 W / (m · K) ist, und/oder von welchem Material eine spezifische Wärmekapazität, cp722, kleiner als die spezifische Wärmekapazität, cp712, des Materials des ersten Kopplungskörpers und/oder kleiner 1000 J / (kg · K) ist.

5. Wandlervorrichtung gemäß einem der vorherigen Ansprüche, wobei der erste Temperatursensor (71) mittels eines den ersten Temperaturfühler thermisch mit dem im Zwischenraum gebildeten Fluidvolumen koppelnden dritten Kopplungskörpers (713), der nämliches Fluidvolumen unter Bildung der dritten Grenzfläche (II13) erster Art kontaktiert, gebildet ist.

6. Wandlervorrichtung gemäß dem vorherigen Anspruch, wobei der zweite Temperatursensor (72) mittels eines den zweiten Temperaturfühler thermisch mit dem im Zwischenraum gebildeten Fluidvolumen koppelnden vierten Kopplungskörpers (723), der nämliches Fluidvolumen unter Bildung der vierten Grenzfläche erster Art kontaktiert, gebildet ist.

7. Wandlervorrichtung gemäß dem vorherigen Anspruch,

- wobei der dritte und vierte Kopplungskörper einander baugleich sind; und/oder

- wobei der vierte Kopplungskörper (723) zumindest anteilig, insb. überwiegend oder gänzlich, aus einem Material besteht, von dem eine spezifische Wärmeleitfähigkeit, $\lambda723$, größer als eine spezifische Wärmeleitfähigkeit, $\lambda F$, des im Zwischenraum gehaltenen Fluids (FL2) und/oder größer als 0,1 W / (m · K) ist, und von dem eine spezifische Wärmekapazität, cp723, kleiner als eine spezifische Wärmekapazität, cpF, des im Zwischenraum gehaltenen Fluids (FL2) und/oder kleiner als 2000 J / (kg · K), ist, insb. derart, daß ein Verhältnis, $\lambda723$ / $\lambda F$, der spezifische Wärmeleitfähigkeit, $\lambda723$, nämlichen Materials zur Wärmeleitfähigkeit, $\lambda F$, des im Zwischenraum gehaltenen Fluids (FL2) größer als 0,2 ist, und/oder daß ein Verhältnis, cp723 / cpF, der spezifische Wärmekapazität, cp723, nämlichen Materials zur Wärmekapazität, cpF, des im Zwischenraum gehaltenen Fluids (FL2) kleiner als 1,5 ist; und/oder

- wobei der vierte Kopplungskörper, insb. gänzlich, mittels eines auf dem zweiten Temperaturfühler applizierten, insb. mit Metalloxid-Partikeln versetzten, Kunststoffs, insb. einem Epoxidharz oder einem Silikon, gebildet ist.

8. Wandlervorrichtung gemäß einem der vorherigen Ansprüche,

- wobei dem ersten Kopplungskörper eine Wärmekapazität, C1, innewohnt, die kleiner als 200 J / K, insb. kleiner als 100 J / K, ist, und

- wobei dem zweiten Kopplungskörper eine Wärmekapazität, C2, innewohnt, die kleiner als 200 J / K, insb. kleiner als 100 J / K, ist, insb. derart, daß die Wärmekapazität, C1, des ersten Kopplungskörpers und die zweite Wärmekapazität, C2, des zweiten Kopplungskörpers insgesamt eine Bedingung $\dfrac{1}{10} < \dfrac{C1}{C2} < 1$ erfüllen.

9. Wandlervorrichtung gemäß einem der vorherigen Ansprüche,

- wobei die Wandung des Rohrs eine Wanddicke, s, aufweist, die mehr als 0,5 mm und/oder weniger als 10 mm beträgt; und/oder
- wobei das Rohr einen Innendurchmesser, D, aufweist, der mehr als 0,5 mm und/oder weniger als 200 mm beträgt; und/oder
- wobei das Rohr so bemessen ist, daß es ein Innendurchmesser-zu-Wandstärke-Verhältnis, D /s, definierte als ein Verhältnis eines Innendurchmesser, D, des Rohrs zu einer Wanddicke, s, der Wandung des Rohrs, aufweist, das weniger als 25:1 und/oder mehr als 5:1 beträgt; und/oder
- wobei der erste Temperatursensor, insb. mittels eines Wärmeleitklebers, unter Bildung des ersten Kopplungskörpers stoffschlüssig, insb. adhäsiv, mit der Mantelfläche (10#) der Wandung des Rohrs verbunden ist; und/oder
- wobei der erste Kopplungskörper, insb. gänzlich, mittels eines zwischen der Wandung des Rohrs und dem ersten Temperaturfühler plazierten, insb. sowohl die Mantelfläche (10#) der Wandung als auch den ersten Temperaturfühler kontaktierenden und/oder mit Metalloxid-Partikeln versetzten, Kunststoffs, insb. einem Epoxidharz oder einem Silikon, gebildet ist; und/oder
- wobei der zweite Kopplungskörper mittels einer zwischen der Wandung des Rohrs und dem zweiten Temperaturfühler plazierten, aus einem Metall bzw. einer Legierung, insb. einem Stahl, bestehenden, insb. mit der Wandung des Rohrs stoffschlüssig verbundenen und/oder ringförmigen und/oder das Rohr umgreifenden, Scheibe gebildet ist.

10. Wandlervorrichtung gemäß einem der vorherigen Ansprüche,

- wobei erste Temperatursensor und der zweite Temperatursensor bezogen auf eine gedachte Längsachse des Rohrs bzw. eines geraden Rohrsegments davon azimutal voneinander beabstandet sind; und/oder
- wobei erste Temperatursensor und der zweite Temperatursensor bezogen auf eine gedachte Längsachse des Rohrs bzw. eines geraden Rohrsegments davon axial beabstandet sind, insb. derart, daß das Rohr keine in der Mantelfläche (10#) liegende gedachte, kreisförmige Umfangslinie aufweist, entlang der sowohl der erste Temperatursensor als auch der zweite Temperatursensor positioniert sind; und/oder
- wobei das Rohr zumindest abschnittsweise, insb. überwiegend, gerade, insb. kreiszylindrisch, ist; und/oder wobei das Rohr zumindest abschnittsweise, insb. kreisbogenförmig, gekrümmt ist; und/oder
- wobei die Wandung des Rohrs zumindest anteilig, insb. überwiegend oder gänzlich, aus einem Material, insb. einem Metall oder einer Legierung, besteht, von dem eine spezifische Wärmeleitfähigkeit, $\lambda 10$, größer als 10 W / (m · K), ist und von dem eine spezifische Wärmekapazität, cp1, kleiner als 1000 J / (kg · K) ist; und/oder
- wobei die Wandung des Rohrs aus einem Metall bzw. einer Legierung, insb. Stahl, Titan, Zirkonium, Tantal, besteht; und/oder
- wobei das Rohr dafür eingerichtet ist, mechanische Schwingungen um eine zugehörige statische Ruhelage auszuführen.

11. Wandlervorrichtung gemäß einem der vorherigen Ansprüche, wobei das Rohr weiters dafür eingerichtet ist, vom Fluid durchströmt und währenddessen vibrieren gelassen zu werden, insb. derart, daß das Rohr mechanischen Schwingungen um eine diesem zugehörige statische Ruhelage ausführt, die geeignet sind, im strömenden Fluid von einer Massendurchflußrate, m, abhängige Corioliskräfte zu induzieren, und/oder daß das Rohr mechanischen Schwingungen um eine diesem zugehörige statische Ruhelage ausführt, die geeignet sind, im Fluid von einer Viskosität, $\eta$, des Fluids abhängige Reibungskräfte zu induzieren, und/oder daß das Rohr mechanischen Schwingungen um eine diesem zugehörige statische Ruhelage ausführt, die geeignet sind, im Fluid von einer Dichte, $\rho$, des Fluids abhängige Trägheitskräfte zu induzieren.

12. Wandlervorrichtung nach einem der vorherigen Ansprüche, weiters umfassend:

- einen Schwingungserreger (E) zum Anregen und Aufrechterhalten von mechanischen Schwingungen des wenigstens einen Rohrs um eine zugehörige statische Ruhelage, sowie

- einen Schwingungssensor (S1) zum Erfassen von mechanischen Schwingungen des wenigstens einen Rohrs.

13. Meßsystem zum Messen wenigstens einer Meßgröße, insb. einer Temperatur, einer Dichte und/oder einer Viskosität, eines strömenden Fluids, insb. eines Gases, einer Flüssigkeit oder einer fließfähigen Dispersion, welches Meßsystem umfaßt:

- zum Führen des Fluids eine Wandlervorrichtung gemäß einem der vorherigen Ansprüche;
- sowie eine, insb. mittels eines Mikroprozessors gebildete, Meß- und Betriebs-Elektronik (ME).

14. Meßsystem nach dem vorherigen Anspruch mit einer Wandlervorrichtung nach Anspruch 12,

--wobei die Meß- und Betriebs-Elektronik dafür eingerichtet ist, zum Anregen von mechanischen Schwingungen des Rohrs ein den Schwingungserreger (E) treibendes Erregersignal (e) zu generieren, und
-- wobei der Schwingungserreger dafür eingerichtet ist, mittels des Erregersignals mechanische Schwingungen des Rohrs anzuregen bzw. aufrecht zu erhalten.

15. Meßsystem nach dem vorherigen Anspruch,

- wobei der Schwingungssensor (S1) dafür eingerichtet ist, ein Schwingungen des wenigstens einen Rohrs repräsentierendes Schwingungssignal (s1) zu liefern, und
- wobei die Meß- und Betriebs-Elektronik (ME) dafür eingerichtet ist, unter Verwendung sowohl des ersten Temperaturmeßsignals als auch des zweiten Temperaturmeßsignals sowie des Schwingungssignals einen Dichte-Meßwert, nämlich einen eine Dichte, $\rho$, des Fluids repräsentierenden Meßwert, zu generieren.

16. Meßsystem nach einem der Ansprüche 13 bis 15, wobei die Meß- und Betriebs-Elektronik (ME) dafür eingerichtet ist, unter Verwendung sowohl des mittels der Wandlervorrichtung generierten ersten Temperaturmeßsignals ($\theta$1) als auch des mittels der Wandlervorrichtung generierten zweiten Temperaturmeßsignals ($\theta$2) einen Meßwert zu generieren, der die wenigstens eine Meßgröße, x, repräsentiert.

17. Meßsystem nach Anspruch 13 bis 16, wobei die Meß- und Betriebs-Elektronik (ME) dafür eingerichtet ist, unter Verwendung sowohl des ersten Temperaturmeßsignals ($\theta$1) als auch des zweiten Temperaturmeßsignals ($\theta$2) wenigstens einen eine Ziel-Temperatur, nämlich eine Temperatur an einem für das Meßsystem vorgegebenen innerhalb der Wandlervorrichtung festgelegten, insb. sowohl vom ersten Temperatursensor als auch vom zweiten Temperatursensor entfernten und/oder innerhalb des Rohrs lokalisierten, Vorrichtungsreferenzpunkt (poi) repräsentierenden Temperatur-Meßwert ($X_\Theta$) zu generieren.

18. Meßsystem nach dem vorherigen Anspruch, wobei der Vorrichtungsbezugspunkt (poi) innerhalb der Wandlervorrichtung, insb. in der Wandung des Rohrs oder im Lumen des Rohrs, lokalisiert ist, insb.
derart, daß der Temperatur-Meßwert ($X_\Theta$) eine Rohrtemperatur, nämlich eine von der Wandung des Rohrs angenommene Temperatur, repräsentiert, bzw. derart, daß der Temperatur-Meßwert ($X_\Theta$) eine Meßfluid-Temperatur, nämlich eine Temperatur des innerhalb des Lumens geführten Fluids repräsentiert.

## Claims

1. Transducer unit, comprising:

- a transducer housing (100), particularly metal, having a cavity surrounded by a wall ;
- a tube (10), having an interior channel (10') surrounded by a wall, particularly metal,

-- wherein said tube is arranged inside the cavity of the transducer housing in such a way that an intermediate space (100') is formed between an interior area (100+) of the wall of the transducer housing facing towards the cavity and a lateral area (10#) of the wall of the tube facing towards the cavity, and
-- wherein said tube is designed to conduct, in its interior channel, particularly at least temporarily, a fluid (FL1), particularly a gas, a liquid or a flowable dispersion, in such a way that an interior area (10+) of the wall of the tube facing towards the interior channel is in contact with the fluid conducted in the interior channel to form a first interface (II11) of the first type, particularly an interface between a fluid phase and a solid phase;

- a first temperature sensor (711), particularly formed by a platinum measuring resistor, a thermistor or a thermocouple, said sensor being arranged in the intermediate space (100'), and a first temperature sensor (71) formed by means of a first coupling body (712) coupling said first temperature sensor (711) in a thermoconductive manner with the wall of the tube, said sensor being designed to measure a first measuring point temperature ($\theta1$), particularly a temperature at a first temperature measuring point formed by means of the first temperature sensor, and to convert it to a first temperature measuring signal ($\theta1$), particularly a first electrical measuring signal representing the first measuring point temperature ($\theta1$), said electrical measuring signal particularly having an electrical signal voltage depending on the first measuring point temperature and/or an electrical signal current depending on said first measuring point temperature;

- and a second temperature sensor (721), particularly formed by means of a platinum measuring resistor, a thermistor or a thermocouple, said sensor being arranged in the intermediate space at a distance from the first temperature sensor (711), and a second temperature sensor (72) formed by means of a second coupling body (722) coupling the second temperature sensor in a thermoconductive manner with the wall of the tube, said sensor being designed to measure a second measuring point temperature ($\theta2$), particularly a temperature at a second temperature measuring point formed by means of the second temperature sensor, and to convert it to a second temperature measuring signal ($\theta2$), particularly a second electrical measuring signal representing the second measuring point temperature ($\theta2$), said electrical measuring signal having an electrical signal voltage depending on the second measuring point temperature and/or an electrical signal current depending on the second measuring point temperature;

- wherein the transducer housing and the tube are designed to hold, in the intermediate space (100'), a fluid (FL2), particularly air or an inert gas, particularly having a specific thermal conductivity of less than 1 W/ (m•K), forming a fluid volume enveloping the tube, in such a way that the lateral surface (10+) of the wall of the tube (10) facing towards the intermediate space is in contact with the fluid (FL2) contained in the intermediate space (100') and forming a second interface (1112) of the first type;

- wherein the first temperature sensor (71) is in contact, by means of the first coupling body, with the lateral surface (10#) of the wall of the tube to form a first interface (II21) of the second type, particularly an interface between two solid phases, and the second temperature sensor (72) is in contact, by means of the second coupling body, with the lateral surface (10#) of the wall of the tube to form a second interface (II22) of the second type, in such a way that

-- a first thermal resistance, R1, acts against a heat flow, Q1, resulting from a temperature difference, $\Delta T1$, present between the first interface (1121) of the second type and the first temperature measuring point, said flow passing through said interface (1121) overall and flowing further to the first temperature measuring point,

-- and a second thermal resistance, R2, acts against a heat flow, Q2, resulting from a temperature difference, $\Delta T2$, present between the second interface (II22) of the second type and the second temperature measuring point, said flow passing through said interface (II22) overall and flowing further to the second temperature measuring point,

- wherein the fluid volume surrounding the tube is in contact with the first temperature sensor (71) to form a third interface (II13) of the first type, and with the second temperature sensor (72) to form a fourth interface (II14) of the first type, in such a way that

-- a third thermal resistance, R3, acts against a heat flow, Q3, resulting from a temperature difference, $\Delta T3$, present between the third interface (II13) of the first type and the first temperature measuring point, said flow flowing from the first temperature measuring point overall to said interface (II13) and passing through said interface (II13) overall,

-- and a fourth thermal resistance, R4, acts against a heat flow, Q4, resulting from a temperature difference, $\Delta T4$, present between the fourth interface (II14) of the first type and the second temperature measuring point, said flow flowing from the second temperature measuring point overall to said interface (II14) and passing through said interface (II14) overall,

- and wherein the first thermal resistance, R1, the second thermal resistance, R2, the third thermal resistance, R3, and the fourth thermal resistance, R4, are sized in such a way that a condition

$$0,005 < \frac{1+\dfrac{R4}{R2}}{1+\dfrac{R3}{R1}} < 1$$

is satisfied overall.

2. Transducer unit as claimed in one of the previous claims,

- wherein the first thermal resistance, R1, is less than 1 000 K/W, and the second thermal resistance, R2, is less than 1 000 K/W; and/or
- wherein the first thermal resistance, R1, is less than 30 K/W, particularly less than 25 K/W; and/or
- wherein the third thermal resistance, R3, and the fourth thermal resistance, R4, overall satisfy a condition R3 = R4; and/or
- wherein the first thermal resistance, R1, the second thermal resistance, R2, the third thermal resistance, R3, and the fourth thermal resistance, R4, overall satisfy a condition

$$\frac{1+\dfrac{R4}{R2}}{1+\dfrac{R3}{R1}} < 0,9$$

; and/or
- wherein the first thermal resistance, R1, the second thermal resistance, R2, the third thermal resistance, R3, and the fourth thermal resistance, R4, overall satisfy a condition

$$\frac{1+\dfrac{R4}{R2}}{1+\dfrac{R3}{R1}} > 0,01$$

; and/or
- wherein the third thermal resistance, R3, is greater than 500 K/W, particularly greater than 5 000 K/W, and/or less than 20 000 K/W, particularly less than 10 000 K/W; and/or
- wherein the fourth thermal resistance, R4, is greater than 500 K/W, particularly greater than 5 000 K/W, and/or less than 20 000 K/W, particularly less than 10 000 K/W.

3. Transducer unit as claimed in one of the previous claims, wherein the first coupling body (712) is made at least partially, particularly predominantly or entirely, of a material, particularly a thermal adhesive, of which a specific thermal conductivity, $\lambda 712$, is greater than a specific thermal conductivity, $\lambda F$, of the fluid (FL2) held in the intermediate space and/or greater than 1 W / (m•K), and of which a specific thermal capacity, cp712, is less than a specific thermal capacity, cpF, of the fluid held in the intermediate space and/or less than 2 000 J / (kg•K), particularly in such a way that a ratio, $\lambda 712 / \lambda F$, of the specific thermal conductivity, $\lambda 712$, of said material to the specific thermal conductivity, $\lambda F$, of the fluid held in the intermediate space is greater than 2, and/or in such a way that a ratio, cp712 / cpF, of the specific thermal capacity, cp712, of said material to the specific thermal capacity, cpF, of the (FL2) held in the intermediate space is less than 1.5.

4. Transducer unit as claimed in the previous claim, wherein the second coupling body (722) is made at least partially, particularly predominantly or entirely, of a material, particularly a metal, said material having a specific thermal conductivity, $\lambda 722$, that is greater than the specific thermal conductivity, $\lambda 712$, of the material of the first coupling body (712) and/or greater than 10 W / (m•K), and/or said material having a specific thermal capacity, cp722, that is less than the specific thermal capacity, cp712, of the material of the first coupling body and/or is less than 1 000 J / (kg•K).

5. Transducer unit as claimed in one of the previous claims, wherein the first temperature sensor (71) is formed by means of a third coupling body (713) thermally coupling the first temperature sensor to the fluid volume formed in the intermediate space, said third coupling body being in contact with said fluid volume to form the third interface (II13) of the first type.

6. Transducer unit as claimed in the previous claim, wherein the second temperature sensor (72) is formed by means of a fourth coupling body (723) thermally coupling the second temperature sensor to the fluid volume formed in the intermediate space, said fourth coupling body being in contact with said fluid volume to form the fourth interface of the first type.

7. Transducer unit as claimed in the previous claim,

- wherein the third and the fourth coupling body are identical in design; and/or
- wherein the fourth coupling body (723) is made at least partially, particularly predominantly or entirely, from a material of which a specific thermal conductivity, $\lambda723$, is greater than a specific thermal conductivity, $\lambda F$, of the fluid (FL2) held in the intermediate space and/or is greater than 0.1 W / (m•K), and of which a specific thermal capacity, cp723, is less than a specific thermal capacity, cpF, of the fluid (FL2) held in the intermediate space and/or is less than 2 000 J / (kg•K), particularly in such a way that a ratio, $\lambda723 / \lambda F$, of the specific thermal conductivity, $\lambda723$, of said material to the thermal conductivity, $\lambda F$, of the fluid (FL2) held in the intermediate space is greater than 0.2 and/or that a ratio, cp723 / cpF, of the specific thermal capacity, cp723, of said material to the thermal capacity, cpF, of the fluid (FL2) held in the intermediate space is less than 1.5; and/or
- wherein the fourth coupling body is formed, particularly entirely, by means of a plastic material, particularly an epoxy resin or a silicone, applied on the second temperature sensor and particularly containing metal oxide particles.

8. Transducer unit as claimed in one of the previous claims,

- wherein the first coupling body has an inherent thermal capacity, C1, that is less than 200 J/K, particularly less than 100 J/K, and
- wherein the second coupling body has an inherent thermal capacity, C2, that is less than 200 J/K, particularly less than 100 J/K, particularly in such a way that the thermal capacity, C1, of the first coupling body and the second thermal capacity, C2, of the second coupling body overall satisfy a condition $\dfrac{1}{10} < \dfrac{C1}{C2} < 1$.

9. Transducer unit as claimed in one of the previous claims,

- wherein the wall of the tube has a wall thickness, s, that is greater than 0.5 mm and/or less than 10 mm; and/or
- wherein the tube has an interior diameter, D, that is greater than 0.5 mm and/or less than 200 mm; and/or
- wherein the tube is sized in such a way that it has an interior diameter-wall thickness-ratio, D/s, defined as a ratio of an interior diameter, D, of the tube to a wall thickness, s, of the wall of the tube, which is less than 25:1 and/or greater than 5:1; and/or
- wherein the first temperature sensor, in forming the first coupling body, is connected by a substance-to-substance connection, particularly an adhesive connection, to the lateral surface (10#) of the wall of the tube, particularly by means of a thermal adhesive; and/or
- wherein the first coupling body, is formed, particularly entirely, by means of a plastic material, particularly an epoxy resin or a silicone, placed between the wall of the tube and the first temperature sensor, particularly in contact with both the lateral surface (10#) of the wall and the first temperature sensor and/or containing metal oxide particles; and/or
- wherein the second coupling body is formed by a disk placed between the wall of the tube and the second temperature sensor, said disk being made of a metal or an alloy, particularly a steel, and which is particularly connected to the wall of the tube by means of a substance-to-substance connection and/or is annular and/or surrounds the tube.

10. Transducer unit as claimed in one of the previous claims,

- wherein the first temperature sensor and the second temperature sensor are spaced from one another in an azimuthal manner in relation to an imaginary longitudinal axis of the tube or of a straight tube segment thereof; and/or

- wherein the first temperature sensor and the second temperature sensor are axially spaced in relation to an imaginary longitudinal axis of the tube or of a straight tube segment thereof, particularly in such a way that the tube does not have an imaginary circular circumferential line situated in the lateral surface (10#) along which both the first temperature sensor and the second temperature sensor are both positioned; and/or

- wherein the tube is at least partially, particularly predominantly, straight, particularly circular cylindrical; and/or wherein the tube is at least partially curved, particularly in the form of an arc; and/or

- wherein the wall of the tube is made at least partially, particularly predominantly or entirely, from a material, particularly a metal or an alloy, of which a specific thermal conductivity, $\lambda 10$, is greater than 10 W / (m•K) and of which the specific thermal capacity, cp1, is less than 1 000 J / (kg•K); and/or

- wherein the wall of the tube is made from a metal or an alloy, particularly steel, titanium, zirconium, tantalum; and/or

- wherein the tube is configured to produce mechanical vibrations around a related static rest position.

11. Transducer unit as claimed in one of the previous claims, wherein the tube is also configured to have fluid flow through it and to be allowed to vibrate during this time, particularly in such a way that the tube produces mechanical vibrations around an associated static resting position, said vibrations being suitable to induce, in the flowing fluid, Coriolis forces depending on a mass flow rate, m, and/or in such a way that the tube produces mechanical vibrations around an associated static resting position, said vibrations being suitable to induce, in the fluid, friction forces that depend on a viscosity, $\eta$, of the fluid, and/or in such a way that the tube produces mechanical vibrations around an associated static resting position, said vibrations being suitable to induce, in the fluid, inertia forces depending on a density, $\rho$, of the fluid.

12. Transducer unit as claimed in one of the previous claims, further comprising:

    - a vibration generator (E) designed to produce and maintain mechanical vibrations of the at least one tube around an associated static resting position, and
    - a vibration sensor (S1) designed to measure mechanical vibrations of the at least one tube.

13. Measuring system designed to measure at least one measured variable, particularly a temperature, a density and/or a viscosity, of a flowing fluid, particularly a gas, a liquid or a flowable dispersion, said system comprising:

    - a transducer unit, to conduct the fluid, as claimed in one of the previous claims;
    - as well as a measuring and electronics unit (ME), particularly formed by a microprocessor,

14. Measuring system as claimed in the previous claim with a transducer unit as claimed in Claim 12,

    -- wherein the measuring and operating electronics unit is configured to generate an excitation signal (e) driving the vibration generator (E) with a view to excite mechanical vibrations of the tube, and
    -- wherein the vibration generator is designed to excite or maintain mechanical vibrations of the tube using the excitation signal.

15. Measuring system as claimed in the previous claim

    - wherein the vibration sensor (S1) is designed to deliver a vibration signal (s1) representing vibrations of the at least one tube, and
    - wherein the measuring and operating electronics unit (ME) is configured - using both the first temperature measuring signal and the second temperature measuring signal, as well as the vibration signal - to generate a density measured value, particularly a measured value representing a density, $\rho$, of the fluid.

16. Measuring system as claimed in one of the Claims 13 to 15, wherein the measuring and operating electronics unit (ME) is configured - using both the first temperature measuring signal ($\theta 1$) generated by the transducer unit and the second temperature measuring signal ($\theta 2$) generated by the transducer unit - to generate a measured value that represents the at least one measured variable, x.

17. Measuring system as claimed in one of the Claims 13 to 16, wherein the measuring and operating electronics unit (ME) is configured - using both the first temperature measuring signal ($\theta 1$) and the second temperature measuring signal ($\theta 2$) - to generate at least one temperature measured value ($X_\theta$) representing a target temperature, particularly a temperature at a unit reference point (poi) defined for the measuring system and specified inside the transducer unit, particularly distanced from both the first temperature sensor and from the second temperature sensor and/or located inside the tube.

18. Measuring system as claimed in the previous claim, wherein the unit reference point (poi) is located inside the transducer unit, particularly in the wall of the tube or in the interior channel of the tube, particularly in such a way that the temperature measured value ($X_\theta$) represents a tube temperature, particularly a temperature adopted by the wall of the tube, or in such a way that the temperature measured value ($X_\theta$) represents a measuring fluid temperature, particularly a temperature of the fluid conducted in the interior channel.

**Revendications**

1. Dispositif convertisseur, comprenant :

- un boîtier de convertisseur (100), notamment métallique, présentant une cavité entourée d'une paroi ;
- un tube (10), notamment métallique, présentant un canal intérieur (10') entouré d'une paroi,

-- lequel tube est disposé à l'intérieur de la cavité du boîtier de convertisseur, de telle sorte qu'un espace intermédiaire (100') se forme entre une surface intérieure (100+) de la paroi du boîtier de convertisseur faisant face à la cavité et une surface extérieure (10#) de la paroi du tube faisant face à la cavité, et
-- lequel tube est conçu pour conduire, dans son canal intérieur, notamment au moins temporairement, un fluide (FL1), notamment un gaz, un liquide ou une dispersion liquide, de telle sorte qu'une surface intérieure (10+) de la paroi du tube tournée vers le canal intérieur soit mise en contact avec le fluide conduit dans le canal intérieur, en formant une première interface (II11) de premier type, notamment une interface entre une phase fluide et une phase solide ;

- une première sonde de température (711), notamment formée au moyen d'une résistance de mesure au platine, une thermistance ou un thermocouple, laquelle sonde est disposée dans l'espace intermédiaire (100'), ainsi qu'un premier capteur de température (71) formé au moyen d'un premier corps de couplage (712) couplant la première sonde de température (711) de manière thermoconductrice avec la paroi du tube, lequel capteur est conçu pour mesurer une première température de point de mesure (θ1), notamment une température sur un premier point de mesure de température formé au moyen de la première sonde de température, et à la convertir en un premier signal de mesure de température (θ1), notamment un premier signal de mesure électrique représentant la première température de point de mesure (θ1), lequel signal de mesure électrique présente une tension de signal électrique dépendant de la première température de point de mesure et/ou une intensité de signal électrique dépendant de la première température de point de mesure ;
- ainsi qu'une deuxième sonde de température (721), notamment formée au moyen d'une résistance de mesure au platine, une thermistance ou un thermocouple, laquelle sonde est disposée dans l'espace intermédiaire à distance de la première sonde de température (711), ainsi qu'un deuxième capteur de température (72) formé au moyen d'un deuxième corps de couplage (722) couplant la deuxième sonde de température de manière thermoconductrice avec la paroi du tube, lequel capteur est conçu pour mesurer une deuxième température de point de mesure (θ2), notamment une température sur un deuxième point de mesure de température formé au moyen de la deuxième sonde de température, et à la convertir en un deuxième signal de mesure de température (θ2), notamment un deuxième signal de mesure électrique représentant la deuxième température de point de mesure (θ2), lequel signal de mesure électrique présente une tension de signal électrique dépendant de la deuxième température de point de mesure et/ou une intensité de signal électrique dépendant de la deuxième température de point de mesure ;
- dispositif pour lequel le boîtier de convertisseur et le tube sont conçus de telle sorte à contenir dans l'espace intermédiaire (100') un fluide (FL2), notamment de l'air ou un gaz inerte, présentant notamment une conductivité thermique spécifique inférieure à 1 W / (m•K), en formant un volume de fluide enveloppant le tube, de telle manière que la surface latérale (10+) de la paroi du tube (10) tournée vers l'espace intermédiaire soit en contact avec le fluide (FL2) contenu dans l'espace intermédiaire (100') en formant une deuxième interface (II12) de premier type ;
- le premier capteur de température (71) étant en contact, au moyen du premier corps de couplage, avec la surface latérale (10#) de la paroi du tube en formant une première interface (II21) de second type, notamment une interface entre deux phases fixes, et le deuxième capteur de température (72) étant en contact, au moyen du deuxième corps de couplage, avec la surface latérale (10#) de la paroi du tube en formant une deuxième interface (II22) de second type, de telle sorte

-- qu'une première résistance thermique, R1, s'oppose à un flux thermique, Q1, résultant d'une différence de température, $\Delta$T1, régnant entre la première interface (II21) de second type et le premier point de mesure de température, lequel flux traverse ladite interface (II21) dans son ensemble et circule ensuite vers le premier point de mesure de température,

-- et qu'une deuxième résistance thermique, R2, s'oppose à un flux thermique, Q2, résultant d'une différence de température, $\Delta$T2, régnant entre la deuxième interface (II22) de second type et le deuxième point de mesure de température, lequel flux traverse ladite interface (II22) dans son ensemble et circule ensuite vers le deuxième point de mesure de température,

- le volume de fluide entourant le tube étant en contact avec le premier capteur de température (71) en formant une troisième interface (1113) de premier type, ainsi qu'avec le deuxième capteur de température (72) en formant une quatrième interface (1114) de premier type, de telle sorte

-- qu'une troisième résistance thermique, R3, s'oppose à un flux thermique, Q3, résultant d'une différence de température, $\Delta$T3, régnant entre la troisième interface (1113) de premier type et le premier point de mesure de température, lequel flux circule du premier point de mesure de température dans son ensemble vers l'interface (II13) et traverse en même temps l'interface (1113) dans son ensemble,

-- et qu'une quatrième résistance thermique, R4, s'oppose à un flux thermique, Q4, résultant d'une différence de température, $\Delta$T4, régnant entre la quatrième interface (1114) de premier type et le deuxième point de mesure de température, lequel flux circule du deuxième point de mesure de température dans son ensemble vers l'interface (1114) et traverse en même temps l'interface (1114) dans son ensemble,

- et la première résistance thermique, R1, la deuxième résistance thermique, R2, la troisième résistance thermique, R3, et la quatrième résistance thermique, R4, sont dimensionnées de telle sorte qu'une condition

$$0,005 < \frac{1+\dfrac{R4}{R2}}{1+\dfrac{R3}{R1}} < 1$$

est globalement satisfaite.

2. Dispositif convertisseur selon l'une des revendications précédentes,

- pour lequel la première résistance thermique, R1, est inférieure à 1 000 K/W, et la deuxième résistance thermique, R2, est inférieure à 1 000 K/W ; et/ou

- pour lequel la première résistance thermique, R1, est inférieure à 30 K/W, notamment inférieure à 25 K/W ; et/ou

- pour lequel la troisième résistance thermique, R3, et la quatrième résistance thermique, R4, satisfont à une condition R3 = R4 ; et/ou

- pour lequel la première résistance thermique, R1, la deuxième résistance thermique, R2, la troisième résistance thermique, R3, ainsi que la quatrième résistance thermique, R4, satisfont globalement à une condition

$$\frac{1+\dfrac{R4}{R2}}{1+\dfrac{R3}{R1}} < 0,9$$

; et/ou

- pour lequel la première résistance thermique, R1, la deuxième résistance thermique, R2, la troisième résistance thermique, R3, ainsi que la quatrième résistance thermique, R4, satisfont globalement à une condition

$$\frac{1+\dfrac{R4}{R2}}{1+\dfrac{R3}{R1}} > 0,01$$

; et/ou
- pour lequel la troisième résistance thermique, R3, est supérieure à 500 K/W, notamment supérieure à 5 000 K/W, et/ou inférieure à 20 000 K/W, notamment inférieure à 10 000 K/W ; et/ou
- pour lequel la quatrième résistance thermique, R4, est supérieure à 500 K/W, notamment supérieure à 5 000 K/W, et/ou inférieure à 20 000 K/W, notamment inférieure à 10 000 K/W.

3. Dispositif convertisseur selon l'une des revendications précédentes, pour lequel le premier corps de couplage (712) est constitué au moins partiellement, notamment de manière prédominante ou entièrement, d'un matériau, notamment un adhésif thermoconducteur, dont une conductivité thermique spécifique, $\lambda 712$, est supérieure à une conductivité thermique spécifique, $\lambda F$, du fluide (FL2) contenu dans l'espace intermédiaire et/ou supérieure à 1 W / (m•K), et dont une capacité thermique spécifique, cp712, est inférieure à une capacité thermique spécifique, cpF, du fluide contenu dans l'espace intermédiaire et/ou inférieure à 2 000 J / (kg•K), notamment de telle sorte qu'un rapport, $\lambda 712 / \lambda F$, de la conductivité thermique spécifique, $\lambda 712$, dudit matériau à la conductivité thermique spécifique, $\lambda F$, du fluide contenu dans l'espace intermédiaire est supérieur à 2, et/ou de telle sorte qu'un rapport, cp712 / cpF, de la capacité thermique spécifique, cp712, dudit matériau à la capacité thermique spécifique, cpF, du fluide contenu dans l'espace intermédiaire (FL2) est inférieur à 1,5.

4. Dispositif convertisseur selon la revendication précédente, pour lequel le deuxième corps de couplage (722) est constitué au moins partiellement, notamment de manière prédominante ou entièrement, d'un matériau, notamment un métal, dont le matériau présente une conductivité thermique spécifique, $\lambda 722$, qui est supérieure à la conductivité thermique spécifique, $\lambda 712$, du matériau du premier corps de couplage (712) et/ou supérieure à 10 W / (m•K), et/ou dont la capacité thermique spécifique, cp722, est inférieure à la capacité thermique spécifique, cp712, du matériau du premier corps de couplage et/ou est inférieure à 1 000 J / (kg•K).

5. Dispositif convertisseur selon l'une des revendications précédentes, pour lequel le premier capteur de température (71) est formé au moyen d'un troisième corps de couplage (713) couplant thermiquement le premier capteur de température au volume de fluide formé dans l'espace intermédiaire, le troisième corps de couplage étant en contact avec ledit volume de fluide pour former la troisième interface (1113) de premier type.

6. Dispositif convertisseur selon la revendication précédente, pour lequel le deuxième capteur de température (72) est formé au moyen d'un quatrième corps de couplage (723) couplant thermiquement la deuxième sonde de température au volume de fluide formé dans l'espace intermédiaire, le quatrième corps de couplage étant en contact avec ledit volume de fluide pour former la quatrième interface de premier type.

7. Dispositif convertisseur selon la revendication précédente,

- pour lequel le troisième et le quatrième corps de couplage sont de conception identique ; et/ou
- pour lequel le quatrième corps de couplage (723) est constitué au moins partiellement, notamment de manière prédominante ou entièrement, d'un matériau dont une conductivité thermique spécifique, $\lambda 723$, est supérieure à une conductivité thermique spécifique, $\lambda F$, du fluide (FL2) contenu dans l'espace intermédiaire et/ou est supérieure à 0,1 W/ (m•K), et dont une capacité thermique spécifique, cp723, est inférieure à une capacité thermique spécifique, cpF, du fluide (FL2) contenu dans l'espace intermédiaire et/ou est inférieure à 2 000 J / (kg•K), notamment de telle sorte qu'un rapport, $\lambda 723 / \lambda F$, de la conductivité thermique spécifique, $\lambda 723$, dudit matériau à la conductivité thermique, $\lambda F$, du fluide (FL2) contenu dans l'espace intermédiaire est supérieur à 0,2 et/ou qu'un rapport, cp723 / cpF, de la capacité thermique spécifique, cp723, dudit matériau à la capacité thermique, cpF, du fluide (FL2) contenu dans l'espace intermédiaire est inférieur à 1,5 ; et/ou
- pour lequel le quatrième corps de couplage est formé, notamment entièrement, au moyen d'une matière plastique, notamment une résine époxy ou un silicone, appliquée sur le capteur de température et notamment contenant des particules d'oxyde métallique.

8. Dispositif convertisseur selon l'une des revendications précédentes,

- pour lequel le premier corps de couplage présente une capacité thermique inhérente, C1, qui est inférieure à 200 J/K, notamment inférieure à 100 J/K, et

- pour lequel le deuxième corps de couplage présente une capacité thermique inhérente, C2, qui est inférieure à 200 J/K, notamment particulier inférieure à 100 J/K, notamment de telle sorte que la capacité thermique, C1, du premier corps de couplage et la deuxième capacité thermique, C2, du deuxième corps de couplage satisfont globalement à une condition $\frac{1}{10} < \frac{C1}{C2} < 1$ .

9. Dispositif convertisseur selon l'une des revendications précédentes,

- pour lequel la paroi du tube présente une épaisseur de paroi, s, qui est supérieure à 0,5 mm et/ou inférieure à 10 mm ; et/ou
- pour lequel le tube présente un diamètre intérieur, D, qui est supérieur à 0,5 mm et/ou inférieur à 200 mm ; et/ou
- pour lequel le tube est dimensionné de telle sorte à présenter un rapport diamètre intérieur/épaisseur de paroi, D/s, défini comme un rapport entre un diamètre intérieur, D, du tube et une épaisseur de paroi, s, de la paroi du tube, qui est inférieur à 25:1 et/ou supérieur à 5:1 ; et/ou
- pour lequel le premier capteur de température, en formant le premier corps de couplage, est relié par une liaison de matière, notamment par une liaison adhésive, à la surface latérale (10#) de la paroi du tube ; et/ou
- pour lequel le premier corps de couplage, est formé, notamment entièrement, au moyen d'une matière plastique, notamment une résine époxy ou un silicone, placée entre la paroi du tube et la première sonde de température, notamment en contact à la fois avec la surface latérale (10#) de la paroi et la première sonde de température et/ou contenant des particules d'oxyde métallique ; et/ou
- pour lequel le deuxième corps de couplage est formé au moyen d'un disque placé entre la paroi du tube et la deuxième sonde de température, lequel disque est constitué d'un métal ou d'un alliage, notamment d'acier, et qui est notamment relié à la paroi du tube par une liaison de matière et/ou est annulaire et/ou entoure le tube.

10. Dispositif convertisseur selon l'une des revendications précédentes,

- pour lequel le premier capteur de température et le deuxième capteur de température sont espacés en azimut l'un de l'autre par rapport à un axe longitudinal imaginaire du tube ou d'un segment de tube droit de celui-ci ; et/ou
- pour lequel le premier capteur de température et le deuxième capteur de température sont espacés axialement par rapport à un axe longitudinal imaginaire du tube ou d'un segment de tube droit de celui-ci, notamment de telle sorte que le tube ne présente pas de ligne circonférentielle circulaire imaginaire située dans la surface latérale (10#), ligne le long de laquelle le premier capteur de température et le deuxième capteur de température sont tous deux positionnés ; et/ou
- pour lequel le tube est au moins en partie, notamment de façon prédominante, droit, notamment cylindrique circulaire ; et/ou pour lequel le tube est au moins en partie courbé, notamment en forme d'arc circulaire ; et/ou
- pour lequel la paroi du tube est constituée au moins en partie, notamment de façon prédominante ou complète, d'un matériau, notamment d'un métal ou d'un alliage, dont une conductivité thermique spécifique, $\lambda10$, est supérieure à 10 W/ (m•K) et dont la capacité thermique spécifique, cp1, est inférieure à 1 000 J / (kg•K) ; et/ou
- pour lequel la paroi du tube est constituée d'un métal ou d'un alliage, notamment d'acier, de titane, de zirconium, de tantale ; et/ou
- pour lequel le tube est adapté pour exécuter des vibrations mécaniques autour d'une position de repos statique correspondante.

11. Dispositif convertisseur selon l'une des revendications précédentes, pour lequel le tube est en outre configuré pour être parcouru par le fluide et être mis en vibrations pendant ce temps, notamment de telle sorte que le tube exécute des vibrations mécaniques autour d'une position de repos statique correspondante, lesquelles vibrations sont appropriées à induire, dans le fluide en écoulement, des forces de Coriolis dépendant d'un débit massique, m, et/ou de telle sorte que le tube exécute des vibrations mécaniques autour d'une position de repos statique correspondante, lesquelles vibrations sont appropriées à induire, dans le fluide, des forces de frottement dépendant d'une viscosité, $\eta$, du fluide, et/ou de telle sorte que le tube exécute des vibrations mécaniques autour d'une position de repos statique correspondante, lesquelles vibrations sont appropriées à induire, dans le fluide, des forces d'inertie dépendant d'une densité, p, du fluide.

12. Dispositif convertisseur selon l'une des revendications précédentes, comprenant en outre :

- un excitateur de vibrations (E) destiné à l'excitation et au maintien de vibrations mécaniques de l'au moins un tube autour d'une position de repos statique correspondante, ainsi que
- un capteur de vibrations (S1) destiné à la mesure des vibrations mécaniques de l'au moins un tube.

13. Système destiné à la mesure d'une grandeur mesurée, notamment une température, une densité et/ou une viscosité, d'un fluide en écoulement, notamment un gaz, un liquide ou une dispersion liquide, lequel système comprend :

- pour le guidage du fluide, un dispositif convertisseur selon l'une des revendications précédentes ;
- ainsi qu'une électronique de mesure et d'exploitation (ME), notamment constituée d'un microprocesseur,

**14.** Système de mesure selon la revendication précédente avec un dispositif convertisseur selon la revendication 12,

-- pour lequel l'électronique de mesure et d'exploitation est conçue pour générer un signal d'excitation (e) pilotant l'excitateur de vibrations (E) en vue de l'excitation de vibrations mécaniques du tube, et
-- pour lequel l'excitateur de vibrations est conçu pour exciter ou maintenir des vibrations mécaniques du tube au moyen du signal d'excitation.

**15.** Système de mesure selon la revendication précédente

- pour lequel le capteur de vibration (S1) est conçu pour délivrer un signal de vibration (s1) représentant les vibrations de l'au moins un tube, et
- pour lequel l'électronique de mesure et d'exploitation (ME) est configurée - en utilisant à la fois le premier signal de mesure de température et le deuxième signal de mesure de température, ainsi que le signal de vibration - pour générer au moins une valeur mesurée de densité, notamment une valeur mesurée représentant une densité, $\rho$, du fluide.

**16.** Système de mesure selon l'une des revendications 13 à 15, pour lequel l'électronique de mesure et d'exploitation (ME) est configurée - en utilisant à la fois le premier signal de mesure de température ($\theta$1) généré par le dispositif convertisseur et le deuxième signal de mesure de température ($\theta$2) généré par le dispositif convertisseur - pour générer une valeur mesurée qui représente l'au moins une grandeur mesurée, x.

**17.** Système de mesure selon l'une des revendications 13 à 16, pour lequel l'électronique de mesure et d'exploitation (ME) est configurée - en utilisant à la fois le premier signal de mesure de température ($\theta$1) et le deuxième signal de mesure de température ($\theta$2) - pour générer au moins une valeur mesurée de température ($X_\theta$) représentant une température cible, notamment une température sur un point de référence du dispositif (poi) prédéfini pour le système de mesure et fixé à l'intérieur du dispositif convertisseur, notamment éloigné à la fois du premier capteur de température et du deuxième capteur de température et/ou localisé à l'intérieur du tube.

**18.** Système de mesure selon la revendication précédente, pour lequel le point de référence du dispositif (poi) est localisé à l'intérieur du dispositif convertisseur, notamment dans la paroi du tube ou dans le canal intérieur du tube, notamment de telle sorte que la valeur mesurée de température ($X_\theta$) représente une température du tube, notamment une température adoptée par la paroi du tube, ou de telle sorte que la valeur mesurée de température ($X_\theta$) représente une température du fluide de mesure, notamment une température du fluide guidé dans le canal intérieur.

Fig. 1

*Fig. 2*

EP 3 117 189 B1

*Fig. 3*

EP 3 117 189 B1

10#

721

72

722

71

10

**Fig. 5**

EP 3 117 189 B1

Fig. 6

Fig. 7

**Fig. 8**

*Fig. 9*

Fig. 10

**IN DER BESCHREIBUNG AUFGEFÜHRTE DOKUMENTE**

**In der Beschreibung aufgeführte Patentdokumente**

- EP 919793 A
- US 20040187599 A
- US 20080127745 A
- US 20110113896 A
- US 4768384 A
- US 5602346 A
- US 6047457 A
- US 7040179 B
- US 7549319 B
- WO 0102816 A
- WO 2009051588 A
- WO 2009134268 A
- WO 2012018323 A
- WO 2012033504 A
- WO 2012067608 A
- WO 2012115639 A
- US 768384 A4
- US 20010037690 A
- US 20110265580 A
- US 20110146416 A
- US 20100242623 A
- WO 2013092104 A
- WO 0129519 A
- WO 9802725 A
- WO 9421999 A
- WO 8802853 A
- US 7200503 B
- US 7792646 B
- WO 9607081 A
- US 6311136 B